# EUROPÄISCHE PATENTSCHRIFT

(11) **EP 3 558 852 B1**
(45) Veröffentlichungstag und Bekanntmachung des Hinweises auf die Patenterteilung: **20.04.2022**
(21) Anmeldenummer: 17709600.5
(22) Anmeldetag: 21.02.2017
(51) Int. Cl.: B65G 43/02, B65G 47/08

(54) **HANDHABUNGSSYSTEM UND VERFAHREN ZUM UMGANG MIT STÜCKGÜTERN**
HANDLING SYSTEM AND METHOD FOR HANDLING PIECE GOODS
SYSTÈME DE MANIPULATION ET PROCÉDÉ DE MANUTENTION DE MARCHANDISES DE DÉTAIL

(30) Priorität: 22.12.2016 DE 102016125361
(43) Veröffentlichungstag der Anmeldung: 30.10.2019
(73) Patentinhaber: Krones Aktiengesellschaft, 93073 Neutraubling (DE)
(72) Erfinder: ASTNER, Michael, 93073 Neutraubling (DE); BEER, Erhard, 93073 Neutraubling (DE); KOLLMUSS, Manuel, 93073 Neutraubling (DE); MEHDI, Arsalan, 93073 Neutraubling (DE)
(74) Vertreter: Benninger, Johannes
(86) Internationale Anmeldenummer: PCT/EP2017/053886
(87) Internationale Veröffentlichungsnummer: WO 2018/114060

(56) Entgegenhaltungen:
- EP-A1- 3 031 755
- EP-A2- 2 246 278
- WO-A1-00/03846
- WO-A1-2015/014559
- WO-A1-2015/036194
- WO-A2-2016/094923
- DE-A1-102013 204 095
- DE-U1- 20 108 401
- FR-A1- 2 993 870
- US-A1- 2010 152 894

## Beschreibung

Die vorliegende Erfindung betrifft ein Handhabungssystem sowie ein Verfahren zum Umgang mit und/oder zur Handhabung von Stückgütern mit den Merkmalen der unabhängigen Ansprüche.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Unterlagen wie etwa Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde, um Cluster o. dgl. Artikel, wahlweise mit solcherart zusammengefassten Getränkebehältern, handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung durch optische Sensoren wie etwa Lichtschranken vorhanden sein kann. Ebenso denkbar ist es, die Stückgüter vereinzelt von dem Transportband durch schrittweises Fahren des Lagenbildungsbandes zu übergeben. Um auf eine solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z. B. Kartons, Schrumpfpacks, Trays und Kunststoffkisten dienen, kennt der Stand der Technik unterschiedliche Ausführungsvarianten. So können etwa Stückgüter zusammengeführt werden, indem sie in eine zweidimensionale Formation (Blockbildung, z. B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein Zyklus, normalerweise jedoch werden mehrere Zyklen benötigt. Die teilweise diskontinuierliche Förderung mit ihren relativ abrupten Geschwindigkeits- bzw. Richtungsänderungen verursacht entsprechend hohe mechanische Belastungen der Stückgüter, was einer produktschonenden Verarbeitung der Stückgüter abträglich sein kann.

Das Dokument EP 1 456 101 A2 offenbart eine Vorrichtung zur Reihenbildung von Packgütern für Gebindepalletierer. Der Gebindepalletierer umfasst mindestens eine Lagenstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere Schrumpfpacks, zur Schichtenbildung, umfassend einen kontinuierlich antreibbaren Förderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Aus der DE 10 2011 080 812 A1 ist weiterhin ein Verfahren zur Bildung von palettierfähigen Lagen aus nebeneinander stehenden Stückgütern auf einem Lagenbildungsplatz bekannt. Dem Lagenbildungsplatz ist ein programmgesteuerter Manipulator zum Abholen und/oder Überführen einzelner oder mehrerer Stückgüter an wenigstens zwei räumlich voneinander entfernten und/oder räumlich versetzten Zuführstationen und zum Positionieren durch Drehen und/oder Verschieben der Stückgüter in vorgebbare Freigabepositionen auf dem Lagenbildungsplatz zugeordnet.

Solche Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind. EP2246278A2 offenbart ein Verfahren und eine Vorrichtung nach den Oberbegriffen der Ansprüchen 1 und 11.

Alle bekannten Handhabungs-, Gruppier- oder Palettiersysteme können jedoch kaum mit Störungsereignissen wie mit Ausfällen von Antriebs- oder Handhabungsmodulen umgehen, die etwa durch vorübergehende Unterbrechungen der elektrischen Energieversorgung verursacht sein können. So ist bei bekannten Systemen nach einem Spannungsabfall oder einer Unterbrechung der Energieversorgung eine Fortsetzung des Produktionsbetriebes nicht ohne manuelles Eingreifen möglich. Hierzu ist es erforderlich, zumindest das Gruppiersystem manuell zu entleeren, die Maschine in eine Grundausgangsstellung zurückzusetzen und den Produktionsbetrieb im Anschluss wieder zu starten. Hierbei ist es unverzichtbar, den Produktionsbetrieb bei einem Neustart immer von einer definierten Ausgangssituation zu starten, nämlich dem Anfang einer neuen Lage. Ein manuelles Eingreifen verursacht einen hohen Personal- und Zeitaufwand.

Ein vorrangiges Ziel der Erfindung besteht darin, diese Nachteile zu beheben und ein Verfahren zur Handhabung von Stückgütern sowie ein entsprechendes Handhabungssystem zur Verfügung zu stellen, das mit derartigen Störungsereignissen umgehen und insbesondere ein manuelles Eingreifen nach der Beseitigung von Störungen im Produktionsablauf verzichtbar machen kann.

Dieses Ziel der Erfindung wird mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche umfassen. Merkmale vorteilhafter Weiterbildungen der Erfindung ergeben sich aus den jeweiligen abhängigen Ansprüchen.

Zur Erreichung des genannten Ziels schlägt die Erfindung ein Verfahren zum Umgang mit Stückgütern oder Gebinden und/oder zur Handhabung und/oder zur Positionierung bzw. Positionsveränderung von Stückgütern oder Gebinden vor, wobei diese Stückgüter oder Gebinde die in mindestens einer Reihe hintereinander in einer Förder- bzw. Transportrichtung auf einer Horizontalfördereinrichtung bewegt werden. Das Verfahren sieht vor, dass bei jedem Arbeitstakt jeweils wenigstens ein transportiertes Stückgut oder Gebinde mittels mindestens einer Handhabungseinrichtung aus der mindestens einen Reihe klemmend und/oder kraft- und/oder formschlüssig erfasst, von der Reihe räumlich abgetrennt und in eine definierte relative Zielposition und/oder Zielausrichtung gegenüber nachfolgenden Stückgütern oder Gebinden gebracht wird, um beispielsweise aus eine definierten Anzahl von solchermaßen neu positionierten und/oder ausgerichteten Stückgütern eine palettierfähige Lage zu bilden, wobei mehrere solcher Lagen in nachfolgenden Verfahrensschritten übereinander gestapelt und beispielsweise auf einer hierfür bereitgestellten Palette abgelegt werden können. Nach solchermaßen erfolgter Handhabung und Neupositionierung und/oder -ausrichtung wird das mindestens eine abgetrennte und bewegte Stückgut oder Gebinde in gleicher Förder- bzw. Transportrichtung wie zuvor weitertransportiert, insbesondere auf einer sich gleichmäßig in Förder- bzw. Transportrichtung bewegenden Auflageebene, die beispielsweise durch eine hierfür typischerweise verwendete Horizontalfördereinrichtung mit einem endlos umlaufenden Gliederband oder einer endlos umlaufenden Fördermatte o. dgl. gebildet sein kann.

Erfindungsgemäß wird nach einem aufgetretenen und wieder beseitigten Störungsereignis mit einem zumindest vorübergehenden Stillstand der Horizontalfördereinrichtung und der Handhabungseinrichtung die Handhabungseinrichtung zunächst neu initialisiert. Ein solches Störungsereignis kann insbesondere durch einen vorübergehenden Ausfall der elektrischen Energieversorgung der gesamten Handhabungs- und/oder Verpackungsanlage oder auch von Teilen dieser Anlage gegeben sein. Sobald die Störung behoben, d.h. bspw. die elektrische Energieversorgung wieder hergestellt ist und die Handhabungseinrichtung neu initialisiert wurde, kann nahezu gleichzeitig oder nach einer sinnvollen Verzögerungsphase die Horizontalfördereinrichtung selbsttätig wieder anfahren, so dass der zuvor unterbrochene Handhabungs- und/oder Positionsveränderungsprozess weitgehend unverändert wieder fortgesetzt werden kann.

Das erfindungsgemäße Verfahren hat gegenüber bekannten Verfahren und Anlagen den besonderen Vorteil, dass keine manuellen Eingriffe im Zusammenhang mit dem Wiederanfahren der Verpackungs- und/oder Handhabungsanlage für die zu positionierenden bzw. in eine stapelbare Anordnung zu bringenden Stückgüter erforderlich sind, sondern dass nach beseitigten Störungen ein selbsttätiger Start für einen nahtlos an eine zuvor unterbrochene Handhabungssituation anknüpfende weitere Handhabung und Positionierung der Stückgüter erfolgen kann. Während bei derzeit bekannten Gruppiersystemen nach einem Spannungsabfall oder einem vorübergehenden Ausfall der elektrischen Energieversorgung eine Fortsetzung des Produktionsbetriebes nicht ohne manuelles Eingriffen möglich ist, liefert das erfindungsgemäße Verfahren eine solche Möglichkeit des Weiterbetriebes des Positionier- und/oder Gruppiervorganges für Stückgüter. Ein manuelles Entleeren und Zurücksetzen der Maschine in einen Ausgangszustand, bei dem mit dem Gruppieren einer neuen Lage begonnen werden muss, kann auf diese Weise entfallen. Dagegen war bisher ein Starten des Produktionsbetriebes bzw. eine die Wiederaufnahme des Produktionsbetriebes innerhalb eines bereits begonnenen Verarbeitungszyklus nicht möglich. Ein mit Hilfe des erfindungsgemäßen Verfahrens nun unnötig gewordenes manuelles Eingreifen in den Handhabungs-, Manipulierungs- und/oder Gruppierungsprozesses für die Stückgüter ist besonders deshalb nachteilig, da es personellen Aufwand erfordert und einen relativ langen Stillstand bedingt, obwohl die eigentliche Störung bereits wieder behoben ist. Zudem müssen die aus dem Verarbeitungsprozess manuell entnommenen Artikel, Stückgüter oder Gebinde wieder in die Produktion zurückgeführt werden, was zusätzlichen Aufwand bedeutet.

Das erfindungsgemäße Verfahren ermöglicht es, dass die Horizontalfördereinrichtung nach behobener Störung und/oder abgeschlossenem Störungsereignis und/oder dessen Beseitigung selbsttätig und automatisch wieder anfährt, und dass zudem auch die Handhabungseinrichtung nach erfolgter Initialisierung den zuvor unterbrochenen Handhabungs- und/oder Positionierungsprozess für die Stückgüter an der unterbrochenen Stelle fortsetzt. Das Verfahren kann somit als selbstheilender Prozess bzw. als vollautomatisch ablaufender Prozess betrachtet werden, der jegliches manuelles Eingreifen nach behobener Störung überflüssig macht, denn das Verfahren sieht ein Wiederanfahren der Horizontalfördereinrichtung sowie die Fortsetzung des Handhabungs- und Positionierungsprozesses der Handhabungseinrichtung ohne manuelle Eingriffe, insbesondere ohne manuelle Eingriffe im Zusammenhang mit der Entnahme von Stückgütern vor.

Zwar ist mit dem Auftreten eines Störungsereignisses eine Systemunterbrechung verbunden, doch erfolgt nach beseitigtem Störungsereignis eine automatische Fortsetzung des zuvor unterbrochenen Handhabungs- und/oder Positionierungsablaufs für die Stückgüter auf der Horizontalfördereinrichtung bspw. nach einem Stromausfall und einer sich daran anschließenden Wiederherstellung der Stromversorgung. Das problemlose Wiederanfahren des Produktionsprozesses wird erfindungsgemäß dadurch gewährleistet werden, dass alle Positionen der auf der Horizontalfördereinrichtung befindlichen und/oder in einem Erfassungsbereich der Handhabungseinrichtung befindlichen Stückgüter jeweils zwischengespeichert werden, so dass diese Positionen auch nach behobener Störung, d.h. nach der Systemunterbrechung zur Fortsetzung der Prozessabläufe und für die Steuerung der Bewegungsabläufe der Handhabungseinrichtung genutzt und abgerufen werden können.

Eine weitere Variante des erfindungsgemäßen Verfahrens sieht vor, dass die Bewegungssteuerung der Handhabungseinrichtung und/oder der Horizontalfördereinrichtung nach behobener Störung bzw. nach einer Systemunterbrechung in einem Wiederanfahr- und/oder Reparaturmodus betrieben wird, der auch als Aufräummodus oder Restart-Modus bezeichnet werden kann, und der sich hinsichtlich der Steuerung der Handhabungskomponenten von der regulären Bewegungssteuerung unterscheidet. So kann die Steuerung bspw. vorsehen, dass innerhalb von einem, zwei oder mehr Takten mit abweichenden Bewegungssteuerungen gearbeitet wird, wobei ein solcher Takt insbesondere eine Palettenlage an stapelbaren Stückgütern sein kann. So kann insbesondere vorgesehen sein, dass das Verfahren nach behobener Störung für einen definierten Zeitraum im Reparaturmodus bzw. Aufräummodus oder Restart-Modus laufen kann, der als sog. Aufräumprozess / -modus zwischengeschaltet sein kann, bei dem im Wesentlichen nur diejenigen Komponenten aktiviert sind, die zur Herstellung eines regulären Produktionsmodus aktuell notwendig sind. So kann in diesem Modus bspw. zunächst das Band angehalten bleiben und erst langsam anlaufen, während in dieser Phase die Stückgüter in langsamerem Positionierungsprozess gehandhabt und verschoben und/oder gedreht werden.

Das Verfahren kann vorsehen, dass zumindest die Horizontalfördereinrichtung nach behobener Störung bzw. nach einer Systemunterbrechung mit reduzierter Geschwindigkeit (Grenzfall: v=0) anfährt und für einen definierten Zeitraum mit gegenüber dem regulären Produktionsmodus reduzierter Vorschubgeschwindigkeit läuft. Auch kann vorgesehen sein, dass die Handhabungseinrichtung bei mit reduzierter Vorschubgeschwindigkeit angelaufener Horizontalfördereinrichtung mit reduzierter Positionierungsgeschwindigkeit anfährt und für einen definierten Zeitraum mit gegenüber dem regulären Produktionsmodus reduzierter Positionierungsgeschwindigkeit betrieben wird. Auf diese Weise kann sichergestellt werden, dass ohne weitere Störungen, die bspw. durch geringfügige Abweichungen von den Sollpositionen für die Stückgüter verursacht sein können, wieder in den regulären Produktionsmodus gewechselt werden kann. Dies wird durch die erwähnte verlangsamte Bewegungssteuerung für verschiedene Komponenten erleichtert.

Eine weitere vorteilhafte Variante des erfindungsgemäßen Verfahrens kann vorsehen, dass im Reparaturmodus, der auch als Aufräummodus oder als Restart-Modus angesehenen oder bezeichnet werden kann, gespeicherte Positionswerte aller Stückgüter, d.h. Absolutwerte aller Positionen der Stückgüter auf der Horizontalfördereinrichtung, sowie die relevanten Positionswerte der beweglichen Teile oder Abschnitte der Handhabungseinrichtung nach deren Initialisierung abgerufen werden, was eine Fortsetzung des zuvor unterbrochenen Positionierungsprozesses der bis zur Systemunterbrechung noch nicht positionierten Stückgüter erlaubt. Die Verfügbarkeit dieser Positionswerte der Stückgüter sowie der beweglichen Teile der Handhabungseinrichtung erlaubt das "Auftauen" des Systems nach vorherigem "freeze", bedingt durch die Systemunterbrechung. Da die Handhabungseinrichtung vor dem sog. "Auftauen", d.h. der Weiterführung des zuvor unterbrochenen Positionierungszyklus, neu initialisiert wird, kann jeder begonnene und durch das aufgetretene Störungsereignis unterbrochene Arbeitstakt nach Initialisierung der Handhabungseinrichtung problemlos weitergeführt und/oder beendet werden, ggf. mit reduzierten Geschwindigkeiten der beweglichen Auflageebene der Horizontalfördereinrichtung und/oder der Handhabungseinrichtung. Dies wird insbesondere dadurch ermöglicht, dass die Handhabungseinrichtung nach behobener Störung und nach erfolgter Initialisierung mittels einer Abfrage der Signalwerte von beweglichen Abschnitten zumindest der Handhabungseinrichtung zugeordneten Absolutwertgebern sehr exakt in die durch das Störungsereignis unterbrochenen Prozessabläufe und/oder Bewegungsabläufe zurückgeführt werden kann und somit seine Handhabungsschritte in der jeweils unterbrochenen Phase fortsetzen kann. Dies bedeutet, dass ein unterbrochener Greif- und/oder Verschiebeprozess jeweils an der unterbrochenen Stelle durch Lösen der Handhabungseinrichtung von den Stückgütern, durch Initialisieren der Handhabungseinrichtung sowie durch erneutes Greifen und Verschieben der zuvor gegriffenen Stückgüter abgeschlossen werden kann. An einen solchermaßen fertig gestellten Greif- und Verschiebeprozess schließt sich dann der im Lagenbildungsprozess folgende nächste Greif- und Verschiebeprozess an.

Wahlweise kann das Verfahren weiterhin vorsehen, dass im Reparaturmodus bzw. im Aufräummodus oder Restart-Modus mittels einer entsprechend ausgestatteten Bildverarbeitung die Positionen aller Stückgüter erfasst und in Bezug zu den Bewegungen der Handhabungseinrichtung gebracht werden. Alternativ oder zusätzlich kann außerdem vorgesehen sein, dass im Reparaturmodus (Aufräummodus, Restart-Modus) mittels mindestens eines parallel zur Horizontalfördereinrichtung beweglichen Sensors die Positionen aller Stückgüter erfasst und in Bezug zu den Bewegungen der Handhabungseinrichtung gebracht werden. Dieser mindestens eine Sensor, der auch als "Moving-Sensor" bezeichnet werden kann, ist zumindest in x-Achse beweglich, d.h. entlang einer Achse parallel zur Bewegungsrichtung der Horizontalfördereinrichtung, auf der die Stückgüter stehend bewegt werden, während sie von der Handhabungseinrichtung positioniert und bspw. zu einer Lagenanordnung gruppiert werden.

Wenn im Zusammenhang mit der vorliegenden Beschreibung verallgemeinernd von einer Handhabungseinrichtung die Rede ist, so umfasst diese Definition einen Manipulator oder mehrere Manipulatoren sowie auch die mit diesem Manipulator oder mit diesen Manipulatoren zusammenwirkenden beweglichen Transporteinrichtungen, bspw. eine Horizontalfördereinrichtung, auf der Stückgüter innerhalb eines Erfassungsbereiches des Manipulators bewegt, von diesem erfasst und umpositioniert bzw. gruppiert werden.

Die vorliegende Erfindung schlägt zur Erreichung der oben genannten Ziele weiterhin ein Handhabungssystem zum Umgang und/oder zur Handhabung und/oder Positionsveränderung von Stückgütern vor, die in mindestens einer Reihe hintereinander in einer Förder- bzw. Transportrichtung auf einer Horizontalfördereinrichtung bewegt werden. Dieses Handhabungssystem umfasst eine Horizontalfördereinrichtung zur Beförderung von Stückgütern in mindestens einer Reihe hintereinander in einer Förder- bzw. Transportrichtung sowie wenigstens eine der Horizontalfördereinrichtung räumlich zugeordnete Handhabungseinrichtung zur klemmenden und/oder kraft- und/oder formschlüssigen Erfassung jeweils mindestens eines Stückgutes und zu dessen räumlicher Abtrennung von der Reihe und zur Verbringung des mindestens einen Stückgutes in eine definierte relative Zielposition und/oder Zielausrichtung gegenüber nachfolgenden Stückgütern. Außerdem umfasst das Handhabungssystem ein Steuerungssystem zur Überwachung der Vorschubbewegungen der Horizontalfördereinrichtung und der Erfassungs- und Positionierungsbewegungen der wenigstens einen Handhabungseinrichtung sowie zu deren Steuerung, insbesondere zur Ausbildung von palettierbaren Lagenanordnungen aus mehreren verschobenen und neu positionierten und/oder ausgerichteten Stückgütern. In diesem Steuerungssystem sind Steuerungsroutinen zur Erkennung von auftretenden Störungsereignissen mit zumindest vorübergehenden Stillständen der Horizontalfördereinrichtung und/oder der Handhabungseinrichtung und zur Neuinitialisierung der Handhabungseinrichtung, zu deren fortgesetzten Erfassungs- und Positionierungsbewegungen zur Handhabung der Stückgüter sowie zum selbsttätigen Wiederanfahren der Horizontalfördereinrichtung nach behobener Störung und beendetem Störungsereignis enthalten bzw. abgespeichert. Diese im Steuerungssystem enthaltenen bzw. abgespeicherten Steuerungsroutinen ermöglichen ein selbsttätiges und automatisches Wiederanfahren der Horizontalfördereinrichtung nach behobener Störung und/oder deren Beseitigung und sehen ein solches selbsttätiges und automatisches Wiederanfahren der Horizontalfördereinrichtung nach behobener Störung und/oder deren Beseitigung vor.

Bei dem erfindungsgemäßen Handhabungssystem können die im Steuerungssystem enthaltenen bzw. abgespeicherten Steuerungsroutinen nach der Neuinitialisierung der Handhabungseinrichtung für ein selbsttätiges und automatisches Weiterführen des zuvor unterbrochenen Handhabungs- und/oder Positionierungsprozesses für die Stückgüter an der unterbrochenen Stelle sorgen, womit gleichsam ein selbstheilender Prozess bzw. ein vollautomatisches Wiederanfahren der Horizontalfördereinrichtung sowie ein entsprechendes vollautomatisches Fortsetzung des Handhabungs- und Positionierungsprozesses der Handhabungseinrichtung ermöglicht ist, der jegliche manuelle Eingriffe obsolet macht, die bei herkömmlichen Anlagen nach einem Ausfall der elektrischen Energieversorgung oder einer sonstigen Störung des Prozesses, die zu einem Anlagenstillstand führt, unverzichtbar sind.

Das erfindungsgemäße Handhabungssystem, bei dem das auftretende Störungsereignis eine Systemunterbrechung nach sich zieht, und bei dem nach beseitigtem Störungsereignis eine automatische Fortsetzung des zuvor unterbrochenen Handhabungs- und/oder Positionierungsablaufs für die Stückgüter auf der Horizontalfördereinrichtung vorgesehen ist, kann somit ohne manuelle Eingriffe auf Stromausfälle oder sonstige Systemunterbrechungen reagieren, und das ohne jegliche manuelle Eingriffe, bspw. zum Ausräumen der Anlagenbereiche mit noch ungeordneten und nicht mehr eindeutig in ihren Positionen erkennbaren bzw. in den Gruppierungs- bzw. Lagenbildungsprozess integrierbaren Stückgütern.

Bei dem erfindungsgemäßen Handhabungssystems ist eine Sensorik zur Erfassung und Zwischenspeicherung aller Positionen der auf der Horizontalfördereinrichtung befindlichen und/oder in einem Erfassungsbereich der Handhabungseinrichtung befindlichen Stückgüter sowie zu deren Übermittlung an das Steuerungssystem vorhanden, wobei jeweils zwischengespeicherte Positionen der Stückgüter nach der Systemunterbrechung zur Fortsetzung der Prozessabläufe und für die Steuerung der Bewegungsabläufe der Handhabungseinrichtung abrufbar sind. Auf diese Weise können alle unterbrochenen Prozesse nahtlos weitergeführt werden, ohne dass bspw. unvollständige Lagenbilder zunächst von der Horizontalfördereinrichtung entfernt werden müssen, um erneut eine vollständige Lage von Stückgütern zu gruppieren.

Bei einer vorteilhaften Variante des Handhabungssystems können zumindest einigen beweglichen Abschnitten der Handhabungseinrichtung Sensoren und/oder Absolutwertgeber zugeordnet sein, deren Daten für eine Neuinitialisierung nach einer Systemunterbrechung und zur Fortsetzung eines unterbrochenen und noch nicht abgeschlossenen Handhabungsprozesses für mindestens ein zu positionierendes Stückgut verarbeitet werden. Außerdem kann das Steuerungssystem des Handhabungssystems weitere Steuerungsroutinen für einen Wiederanfahr- und/oder Reparaturmodus (Aufräumprozess / -modus) umfassen, der von der regulären Bewegungssteuerung abweicht. Diese Modi weichen mehr oder weniger von der regulären Bewegungssteuerung bzw. Bewegungskurve ab, wobei diese abweichenden Steuerungsroutinen in der Software des Steuerungssystems abgelegt sind. Auf diese Weise können zusätzliche Verfahrkurven abgerufen werden, die von einer normalen CNC-Produktionskurve abweichen, so dass zunächst im Wesentlichen nur die zur Herstellung eines Produktionsmodus notwendigen Komponenten aktiviert werden. Diese Steuerungsroutinen können bspw. zunächst einen Stillstand des Bandes im Modul vorsehen, während die Handhabungseinrichtung Positionsveränderungen für die Stückgüter vornimmt. Wenn die Absolutwerte aller Positionen bekannt sind und abgerufen werden, kann eine nahtlose Fortsetzung des zuvor unterbrochenen Positionierungsprozesses erfolgen.

Wahlweise kann das Handhabungssystem auch in einer Weise ausgestaltet sein, dass das Steuerungssystem Sensorsignale eines Bildverarbeitungsmoduls zur Erfassung der Positionen aller Stückgüter verarbeitet und in Bezug setzt zu den Bewegungen der Handhabungseinrichtung.

Bei einigen oder allen beschriebenen Varianten des Handhabungssystems sowie auch bei einigen oder allen zuvor beschriebenen Verfahrensvarianten kann die wenigstens eine Handhabungseinrichtung bspw. durch einen Parallelkinematik-Roboter mit mindestens einem steuerbaren Greifarm zur Erfassung eines Stückgutes oder gleichzeitig mehrerer Stückgüter gebildet sein, dessen Bewegungsraum räumlich der Horizontalfördereinrichtung zugeordnet ist. Denkbar ist es jedoch auch, dass die wenigstens eine Handhabungseinrichtung durch einen Portalroboter mit mindestens einem steuerbaren Greifarm zur Erfassung eines Stückgutes oder gleichzeitig mehrerer Stückgüter gebildet ist, dessen Bewegungsraum räumlich der Horizontalfördereinrichtung zugeordnet ist. Darüber hinaus könnte die wenigstens eine Handhabungseinrichtung auch durch einen Mehrachsroboter mit mindestens einem steuerbaren Greifarm zur Erfassung eines Stückgutes oder gleichzeitig mehrerer Stückgüter gebildet sein, dessen Bewegungsraum räumlich der Horizontalfördereinrichtung zugeordnet ist.

Es sei an dieser Stelle ausdrücklich erwähnt, dass alle Aspekte und Ausführungsvarianten, die im Zusammenhang mit dem erfindungsgemäßen Handhabungssystem erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zum erfindungsgemäßen Handhabungssystem von bestimmten Aspekten und/oder Zusammenhängen und/oder Wirkungen die Rede ist, so gilt dies gleichermaßen für das erfindungsgemäße Verfahren zum Umgang und/oder zur Handhabung von Stückgütern. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte des erfindungsgemäßen Handhabungssystems betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für das erfindungsgemäße Handhabungssystem.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Fig. 1 zeigt in einem schematischen Ablaufdiagramm eine beispielhafte Abfolge von Verfahrensschritten einer Ausführungsvariante eines erfindungsgemäßen Verfahrens zum Umgang und/oder zur Handhabung und/oder zur Positionsveränderung von Stückgütern.

Fig. 2 zeigt in einer schematischen Draufsicht eine beispielhafte Zusammenstellung von mehreren Stückgütern als Lage, die beispielsweise zur Palettierung und weiteren Verarbeitung dienen kann.

Figuren 3 bis 40 zeigen in schematischer Weise einen zeitlichen Ablauf eines erfindungsgemäßen Verfahrens zum Umgang mit in zwei parallelen Reihen hintereinander bewegten Stückgütern durch eine Handhabungseinrichtung zum Vorbereiten und Gruppieren einer Lage von Stückgütern gemäß Fig. 2.

Figur 41 zeigt eine schematische Perspektivansicht einer Ausführungsform einer Handhabungs- und/oder Manipulationsvorrichtung zur Durchführung einer Variante oder mehrerer Varianten des erfindungsgemäßen Verfahrens.

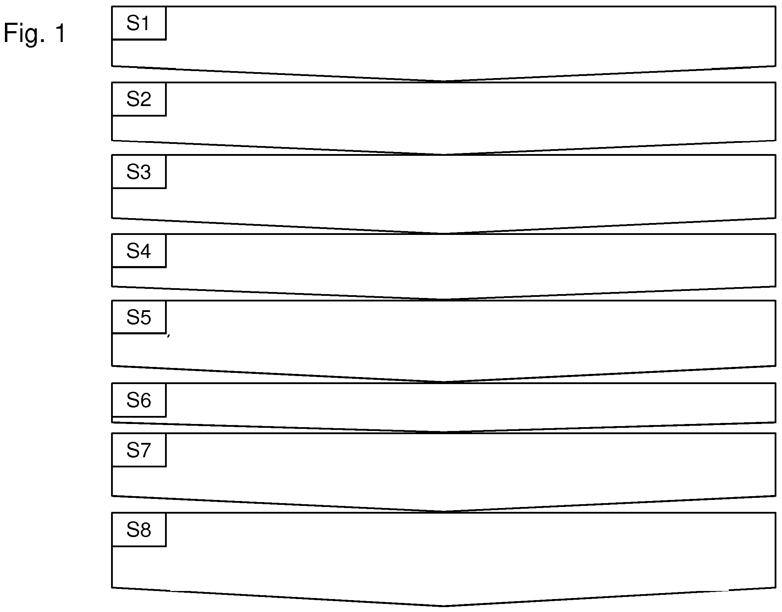

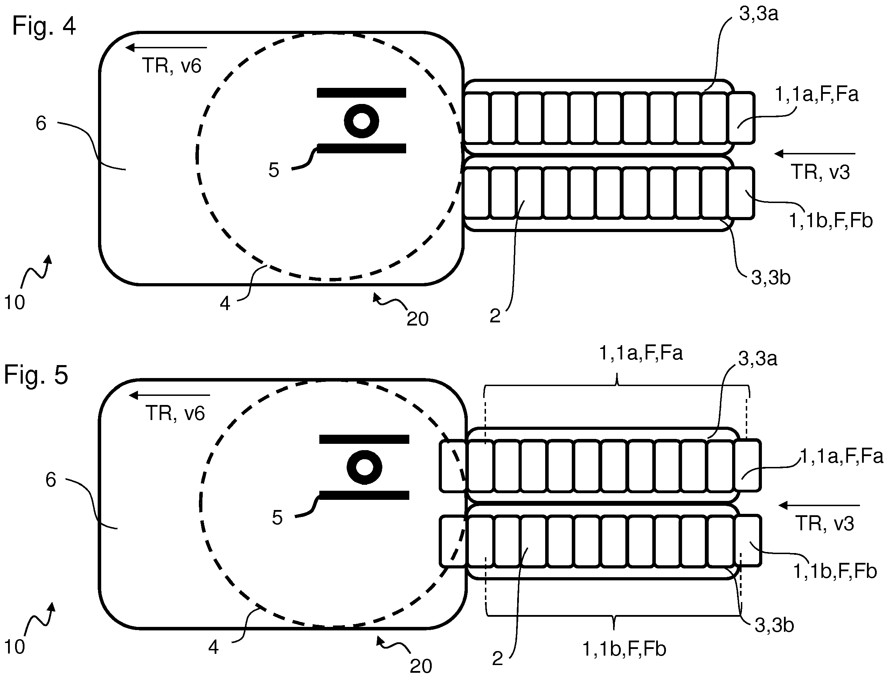

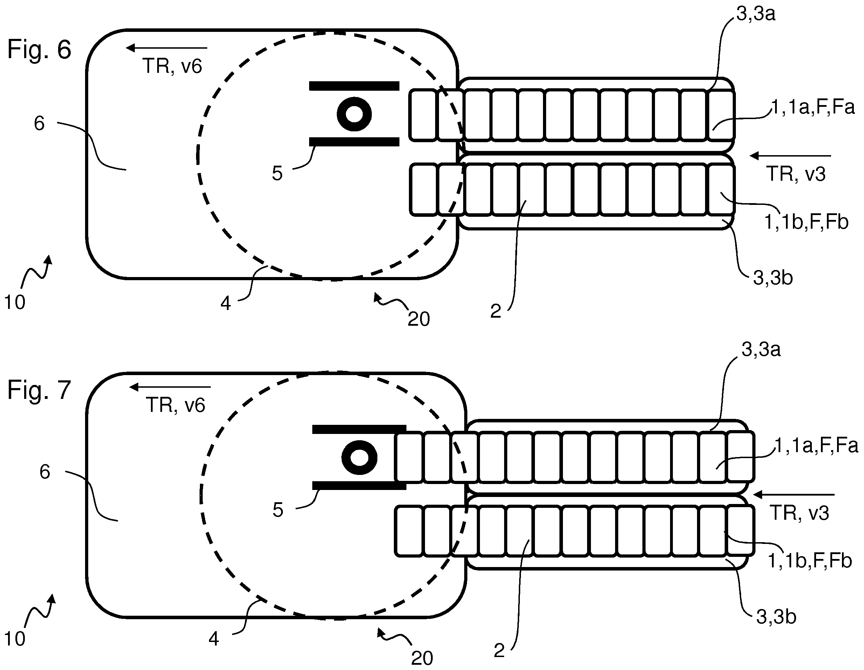

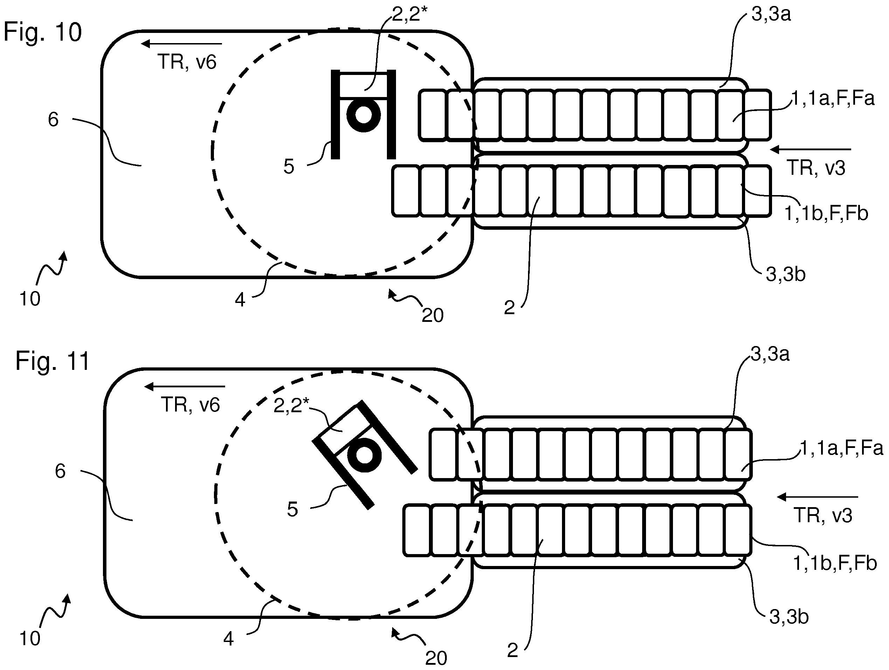

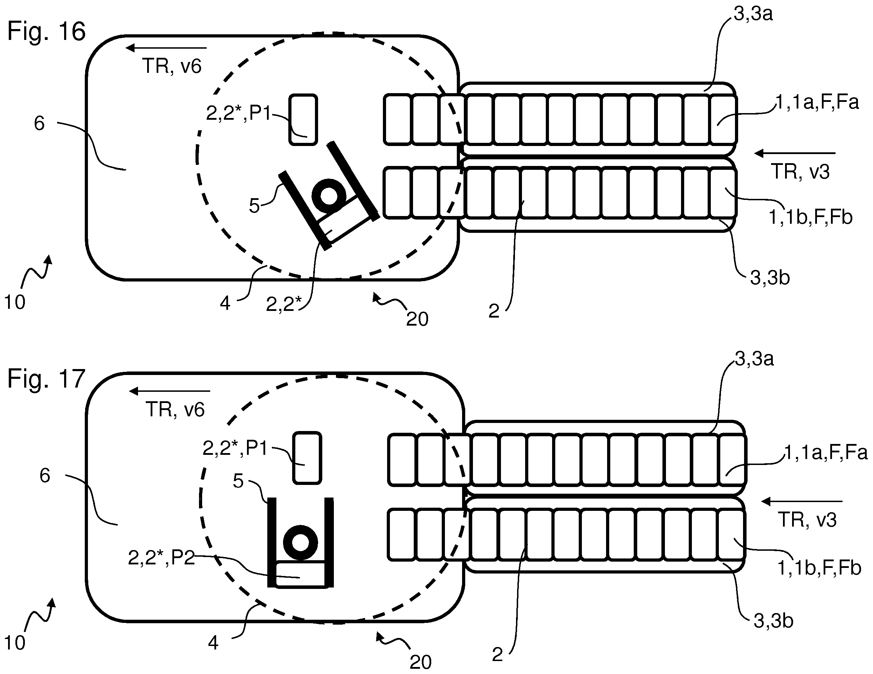

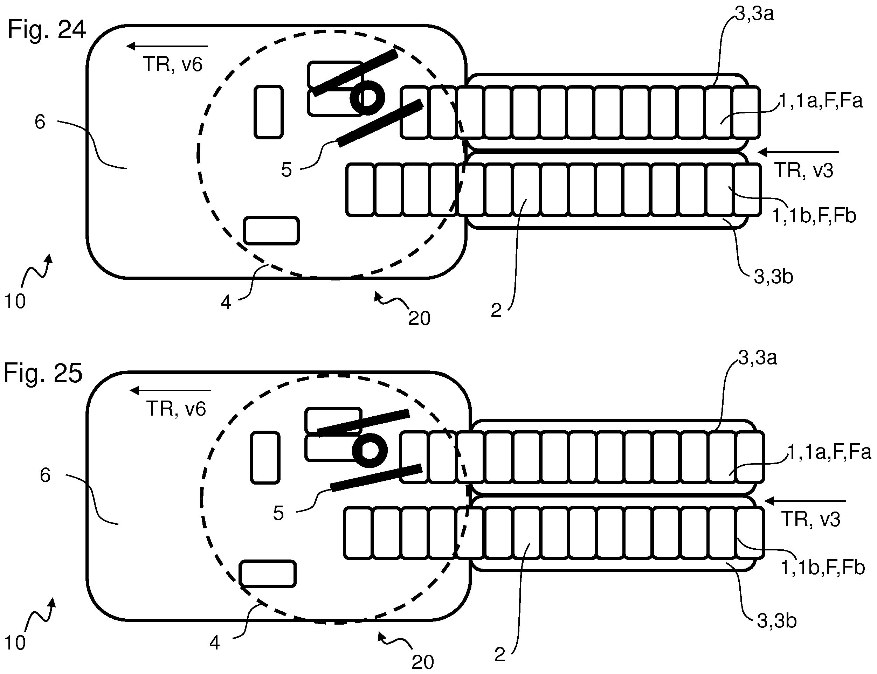

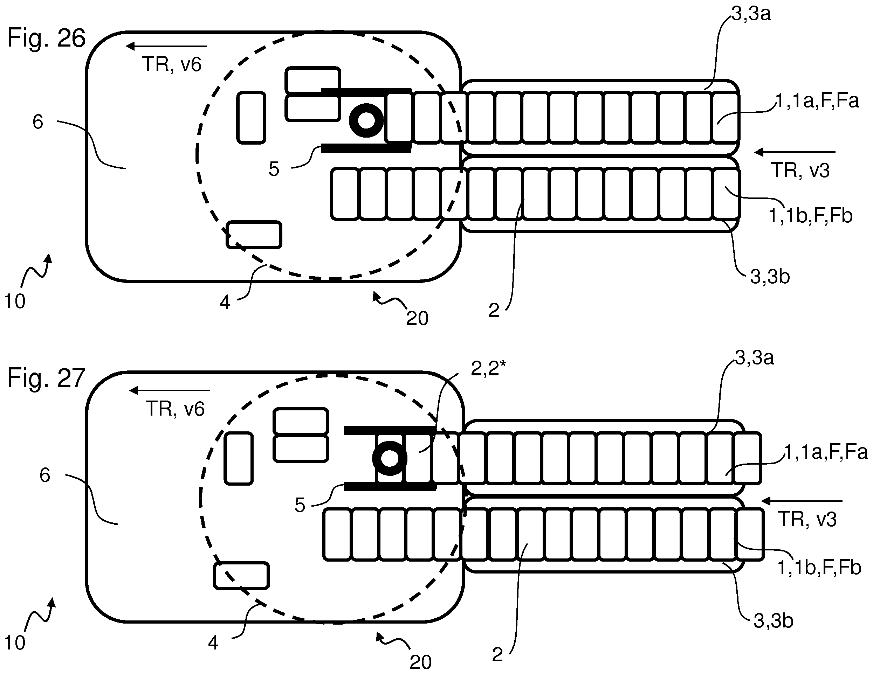

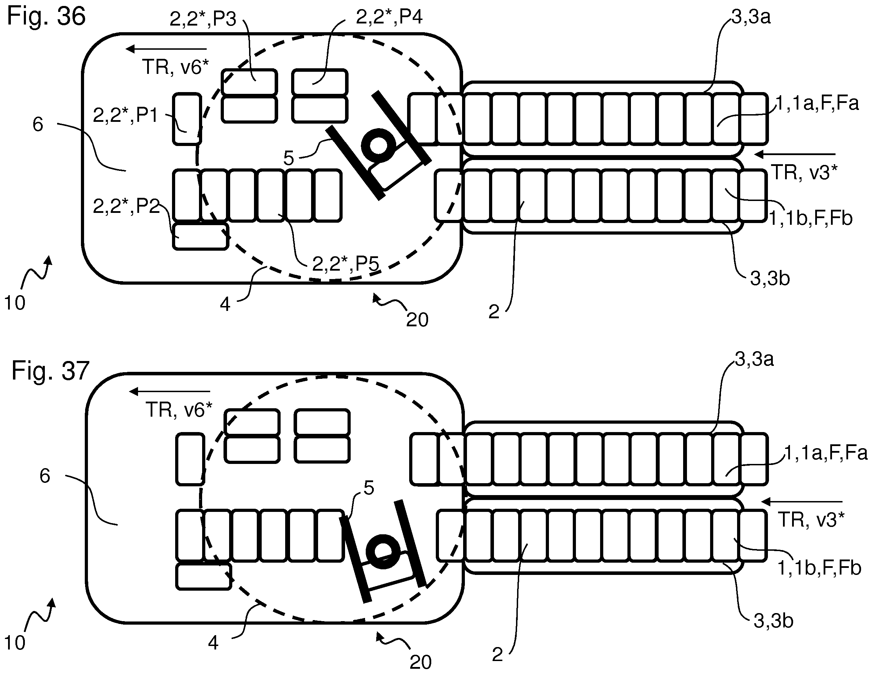

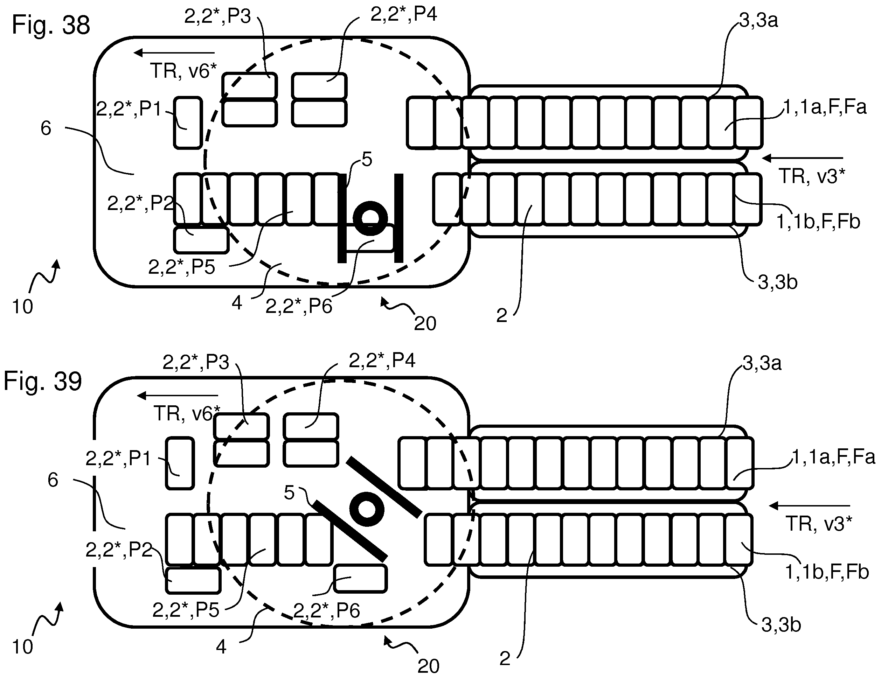

Für gleiche oder gleich wirkende Elemente der Erfindung verwenden die Figuren 1 bis 41 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren oder das erfindungsgemäße Handhabungssystem ausgestaltet sein können und stellen keine abschließende Begrenzung dar. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

Das schematische Ablaufdiagramm der Fig. 1 verdeutlicht anhand einer beispielhaften Abfolge von Verfahrensschritten eine mögliche Ausführungsvariante eines erfindungsgemäßen Verfahrens zum Umgang und/oder zur Handhabung und/oder zur Positionsveränderung von Stückgütern, die in mindestens einer Reihe hintereinander in einer Förder- bzw. Transportrichtung auf einer Horizontalfördereinrichtung bewegt werden (Verfahrensschritt S1), mit dem Ziel, diese Stückgüter bspw. in eine Lagenanordnung zueinander zu bringen, die stapelbar und/oder palettierbar ist, wobei eine Mehrzahl von Stückgütern innerhalb eines definierten, vorzugsweise rechteckförmigen Areals eng aneinander gedrängt sind, so dass sich eine stapel- und/oder palettierbare Anordnung der Stückgüter ergibt. Dieses Verfahren sieht im nachfolgenden Verfahrensschritt S2 vor, dass bei jedem Arbeitstakt jeweils wenigstens ein transportiertes Stückgut, typischerweise jedoch mehrere Stückgüter gleichzeitig mittels mindestens einer Handhabungseinrichtung aus der mindestens einen Reihe klemmend und/oder kraft- und/oder formschlüssig erfasst, von der Reihe räumlich abgetrennt und - im nachfolgenden Verfahrensschritt S3 - in eine definierte relative Zielposition und/oder Zielausrichtung gegenüber nachfolgenden Stückgütern gebracht wird bzw. werden, wonach das mindestens eine abgetrennte und bewegte Stückgut bzw. die mehreren Stückgüter in gleicher Förder- bzw. Transportrichtung wie zuvor weitertransportiert wird/werden.

Das Verfahren sieht eine Fortsetzung des Handhabungsvorganges nach einem vorübergehenden Störungsereignis vor, das bspw. durch einen Ausfall einer elektrischen Energieversorgung verursacht sein kann, und das zu einem vorübergehenden Stillstand sowohl der Förderung der Stückgüter als auch der Antriebseinheiten der Handhabungseinrichtung führt, so dass der Gruppierungsvorgang zumindest unterbrochen, unter ungünstigen Umständen sogar massiv gestört sein kann. Um diese Störungen auszuschließen, sieht das erfindungsgemäße Verfahren in einem Verfahrensschritt S4 vor, dass nach einem aufgetretenen Störungsereignis mit einem zumindest vorübergehenden Stillstand der Horizontalfördereinrichtung und/oder der Handhabungseinrichtung die Handhabungseinrichtung in einem Verfahrensschritt S6 zunächst neu initialisiert wird, wobei außerdem in einem Verfahrensschritt S5 schon alle bisher erreichten Positionen und Ausrichtungen aller innerhalb des Erfassungsbereichs der Handhabungseinrichtung befindlichen Stückgüter erfasst und zwischengespeichert wurden und für eine Fortsetzung des unterbrochenen Prozesses einer Steuerung zur Verfügung gestellt werden. Für die Initialisierung der Handhabungseinrichtung im Verfahrensschritt S6 kann es insbesondere sinnvoll sein, diese in eine Ausgangsposition zu verfahren, bspw. indem ein Greifarm eines Parallelkinematik-Roboters oder eines Portalroboters in eine Neutralposition oder in eine randseitige Position bewegt wird, so dass eine Neukalibrierung der exakten Position des Greifarmes ermöglicht ist.

Nach behobener Störung kann im Verfahrensschritt S7 die Horizontalfördereinrichtung selbsttätig wieder anfahren, so dass der zuvor unterbrochene Handhabungs- und/oder Positionsveränderungsprozess unverändert und ohne manuelles Zutun wieder fortgesetzt werden kann. Auf diese Weise kann jeder begonnene und durch das aufgetretene Störungsereignis unterbrochene Arbeitstakt nach Initialisierung der Handhabungseinrichtung weitergeführt und beendet werden (Verfahrensschritt S8), ggf. mit zunächst reduzierter Geschwindigkeit der Horizontalfördereinrichtung und/oder der Handhabungseinrichtung.

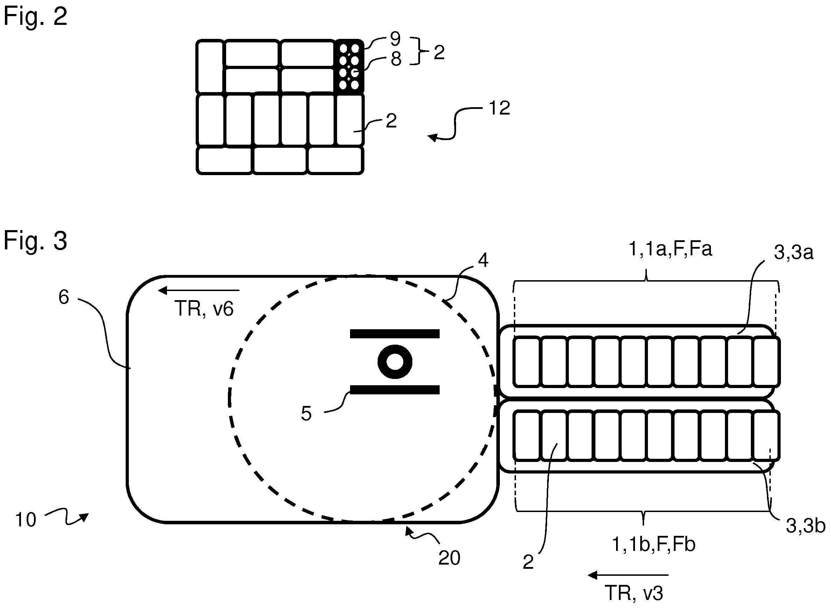

Die schematische Draufsicht der Fig. 2 verdeutlicht eine Zusammenstellung von mehreren Stückgütern 2 als Lage 12, wie sie beispielsweise für die Palettierung und weitere Verarbeitung zusammengestellt werden soll. Im dargestellten Ausführungsbeispiel werden die Stückgüter 2 durch jeweils acht Flaschen 8 gebildet, die mittels einer Schrumpffolie 9 oder eines Umreifungsbandes, ggf. auch mittels Klebeverbindungen, zu Gebinden zusammenfasst sind. Diese Zusammenstellung mehrerer Stückgüter 2 wird im vorliegenden und folgenden Zusammenhang auch als Gruppierung bezeichnet, wobei eine komplette Lage 12 aus mehreren gruppierten Stückgütern 2 innerhalb eines Arbeitstaktes eines nachfolgend näher beschriebenen Lagenbildungsprozesses bezeichnet wird, so dass jede dieser in beliebig andauernder Folge gruppierter bzw. zusammengestellter Lagen 12 jeweils einen Arbeitstakt des Lagenbildungsprozesses bildet bzw. umfasst.

Die im Folgenden näher beschriebenen Figuren 3 bis 40 zeigen in schematischer Weise einen zeitlichen Ablauf eines erfindungsgemäßen Verfahrens zum Umgang mit in zwei parallelen Reihen 1, 1a,1b hintereinander bewegten Stückgütern 2 durch eine entsprechend ausgestattete Handhabungseinrichtung 10 zum Vorbereiten und Gruppieren einer Lage 12 von Stückgütern 2 gemäß Fig. 2.

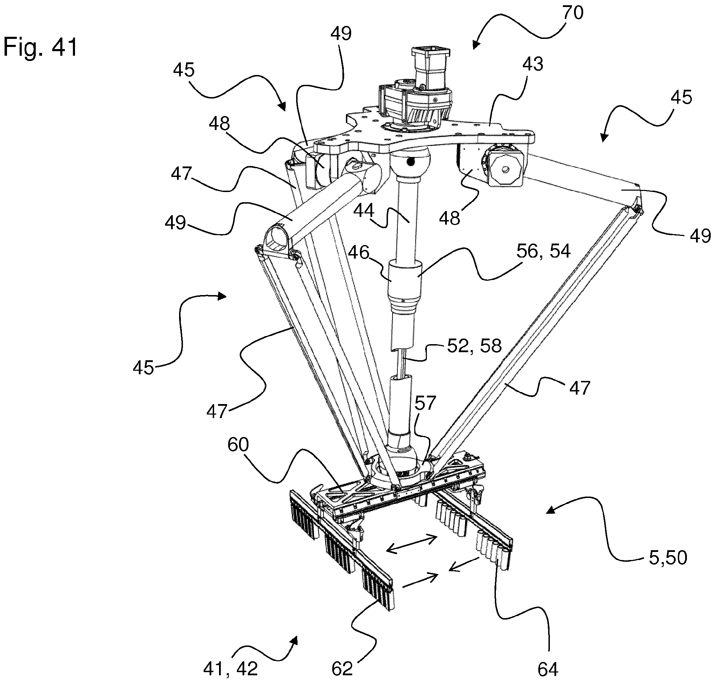

Figur 41 zeigt eine schematische Perspektivansicht einer Ausführungsform einer Handhabungs- und/oder Manipulationsvorrichtung zur Durchführung einer Variante oder mehrerer Varianten des erfindungsgemäßen Verfahrens.

Die in den nachfolgend beschriebenen Figuren allgemein als Handhabungseinrichtung 10 bezeichnete Baugruppe zur Gruppierung der Stückgüter 2 umfasst im vorliegenden Ausführungsbeispiel zwei parallel angeordnete erste Transporteinrichtungen 3, 3a, 3b, über welche unmittelbar aufeinanderfolgende Stückgüter 2 in zwei parallelen Reihen 1, 1a, 1b jeweils unterbrechungsfrei und/oder mit kontinuierlicher Transportgeschwindigkeit v3 in einen Erfassungsbereich 4 mindestens eines beweg-, verschieb- und/oder rotierbaren Manipulators 5 der Handhabungseinrichtung 10 transportiert werden. Insbesondere ist vorgesehen, dass den zwei parallelen ersten Transporteinrichtungen 3a, 3b genau ein Erfassungsbereich 4 eines Manipulators 5 der Handhabungseinrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b jeweils in einer sogenannten geschlossenen Formation F, Fa, Fb, wie in den Figuren 3 ff. dargestellt, insbesondere gut sichtbar in den Figuren 3 bis 8, kontinuierlich in den Erfassungsbereich 4 des Manipulators 5 ein.

Die Figuren 3 bis 40 verdeutlichen insbesondere den in Transportrichtung TR lückenlos weitergeführten Transport der Reihen 1, 1a, 1b bzw. der Formationen F, Fa, Fb im Erfassungsbereich 4 der Handhabungseinrichtung 10. Insbesondere werden die Stückgüter 2 der jeweiligen Reihe 1a, 1b im Erfassungsbereich 4 ohne Unterbrechung und mit unveränderter Transportgeschwindigkeit weitertransportiert. Dem Erfassungsbereich 4 ist eine Horizontalfördereinrichtung 6 zugeordnet, die sich mit einer Geschwindigkeit v6 bewegt. Insbesondere entspricht die Geschwindigkeit v6 der Horizontalfördereinrichtung 6 der Transportgeschwindigkeit v3 der Transporteinrichtungen 3a, 3b. Die in parallelen Reihen 1a, 1b über die Transporteinrichtungen 3a, 3b ankommenden Stückgüter 2 werden durch den Staudruck der nachfolgenden Stückgüter 2 auf die Horizontalfördereinrichtung 6 übergeschoben und dort unterbrechungsfrei weiter befördert.

Weiterhin ist möglich, dass die Stückgüter 2 mehrreihig, insbesondere in mehreren Parallelreihen 1a, 1b, auf einer einzigen, gemeinsamen Transporteinrichtung 3 (nicht dargestellt) zum Erfassungsbereich 4 des Manipulators 5 hin transportiert werden. Die Parallelreihen 1a, 1b können dabei beabstandet zueinander oder weitgehend ohne Abstand zueinander auf der Transporteinrichtung 3 transportiert werden.

Die Horizontalfördereinrichtung 6 und der oberhalb der Horizontalfördereinrichtung 6 angeordnete mindestens eine Manipulator 5 werden zusammen auch als Gruppiermodul 20 der Handhabungseinrichtung 10 bezeichnet.

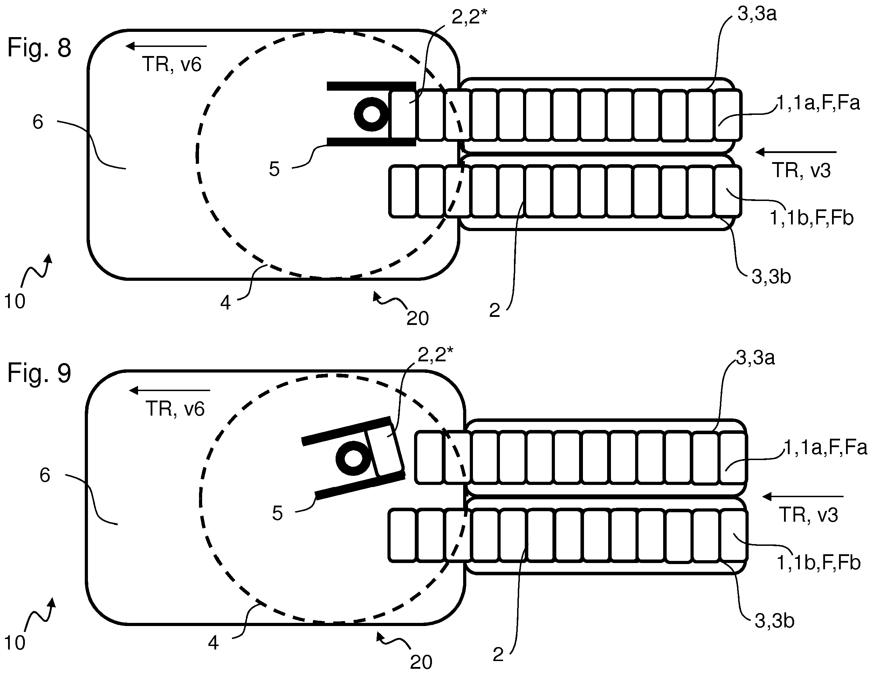

Der Manipulator 5 ist zum klemmenden und/oder kraft- und/oder formschlüssigen Entgegennehmen von Stückgütern 2, 2* innerhalb des Erfassungsbereichs 4 ausgebildet. Wie in Fig. 8 dargestellt, kann der Manipulator 5 zuerst bspw. ein einzelnes Stückgut 2 aus der über die Transporteinrichtung 3a einlaufenden geschlossenen Formation Fa greifen und erfassen. Die vom Manipulator 5 erfassten Stückgüter 2 werden nachfolgend zur Unterscheidung von den in Formation F angeordneten Stückgütern 2 generell mit der Bezugsziffer 2* bezeichnet. Der Manipulator 5 trennt das erfasste Stückgut 2* von der einreihigen Formation Fa ab und überführt das abgetrennte Stückgut 2*, wie in den Figuren 8 bis 12 dargestellt, in eine erste Zielposition P1 und/oder nach erfolgter Drehung in eine Zielausrichtung. Dabei wird das erfasste Stückgut 2* durch den Manipulator 5 zum einen in Transportrichtung TR von der Formation Fa der Stückgüter 2 beabstandet, zudem wird das erfasste Stückgut 2* gegenüber den Stückgütern 2 der Formation Fa verdreht.

Gemäß den in den Figuren 8 bis 12 dargestellten Verfahrensschritten kann das wenigstens eine zuvorderst einlaufende Stückgut 2 aus der geschlossenen Formation Fa erfasst und unter gleichzeitiger Drehbewegung um einen Winkel von beispielsweise ca. 180° in die definierte relative Zielposition P1 und/oder -ausrichtung gegenüber den nachfolgenden Stückgütern 2 der Formation Fa gebracht werden. Hierbei erfolgt die Drehbewegung normalerweise um eine in etwa vertikale Achse, die sich zwischen dem jeweiligen wenigstens einen klemmend und/oder kraft- und/oder formschlüssig erfassten Stückgut 2* und der Zielposition P1 befindet.

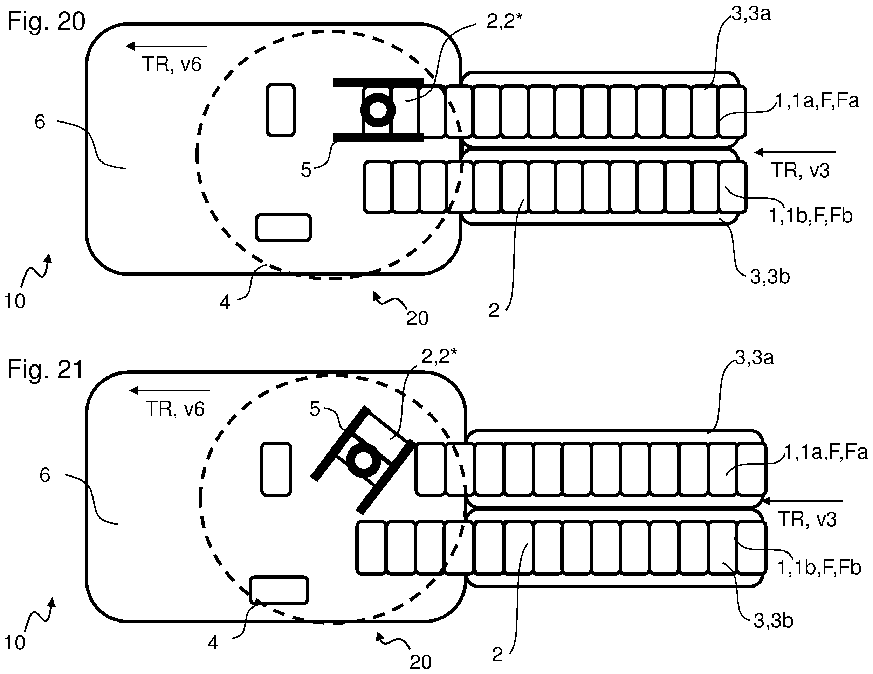

Wie es die Figuren 20 ff. zeigen, kann der Manipulator 5 wahlweise auch gleichzeitig zwei oder drei Stückgüter 2 erfassen und verschieben und/oder drehen. Die in den vorliegend beschriebenen Figuren gezeigten Manipulatorbewegungen sind beispielhaft zu verstehen und dienen in der gezeigten oder auch in davon abweichender Weise

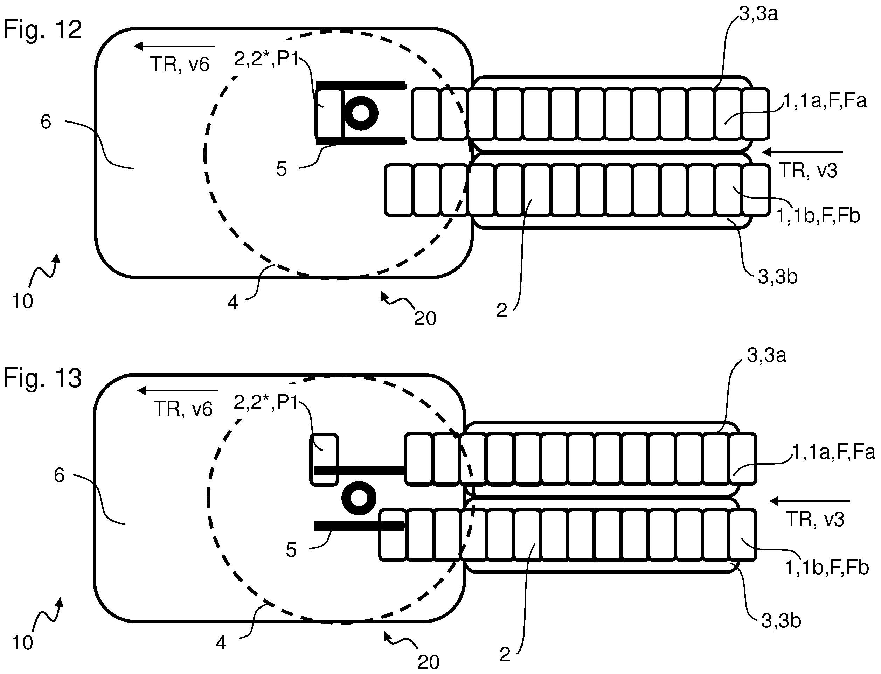

Bei dem gemäß Fig. 8 unsymmetrisch mit nur einem Stückgut 2, 2* beladenen Manipulator 5 kann es vorteilhaft sein, dass der Manipulator 5, um das Stückgut 2, 2* in einer Flucht zur Formation Fa zu beabstanden, dieses nicht durch eine Beschleunigung in Transportrichtung TR verschiebt. Stattdessen führt der Manipulator 5 -wie in den Figuren 9 bis 12 dargestellt - eine Rotation um 180° um eine senkrecht zur horizontalen Auflageebene der Horizontalfördereinrichtung 6 ausgebildeten Drehachse aus. Dadurch wird das erfasste Stückgut 2, 2* in eine gewünschte Zielposition P1 befördert, die sich in einer Flucht beabstandet vor der Formation Fa befindet (vgl. Fig. 12). Gegebenenfalls wird dieser Drehung des Manipulators 5 zusätzlich eine Verschiebung des Manipulators 5 in Transportrichtung TR oder entgegen der Transportrichtung TR überlagert, um die definierte Zielposition P1 exakt einzustellen. Gegebenenfalls erfolgt kurzzeitig eine Beschleunigung des Manipulators 5 in Transportrichtung TR, bevor die Drehung einsetzt, um einer Kollision des Manipulators 5 und der vom Manipulator erfassten Stückgüter 2, 2* mit den nachfolgenden Stückgütern 2 der Formation Fa zu vermeiden.

Durch diese optionalen Drehungen des Manipulators 5 muss dieser in vielen Fällen keine oder nur eine geringe Bewegung in oder entgegen zur Transportrichtung TR ausführen. Dies ist vorteilhaft, da der Manipulator diese Wegstrecke anschließend nicht wieder in der Gegenrichtung zurücklegen muss, um weitere Stückgüter 2 aus einer der einlaufenden Formationen Fa, Fb abzugreifen. Ein weiterer Vorteil solcher Drehungen um insbesondere 180° besteht darin, dass der Manipulator 5 bereits in einer Konfiguration vorliegt, in der der Manipulator 5 sofort weitere Stückgüter 2 erfassen kann, ohne dass zuerst eine Rückdrehung in eine Ausgangsstellung erfolgen muss. D.h. im nachfolgenden Verfahrensschritt können nunmehr mit den Greiferarmen des Manipulators 5, die im beschriebenen Verfahrensschritt der 180° Drehung unbeladen waren, weitere Stückgüter 2 abgegriffen werden. Dieser Aspekt führt ebenfalls zu einer merklichen Zeitersparnis und somit zu einem erhöhten Durchsatz bei der Produktbearbeitung.

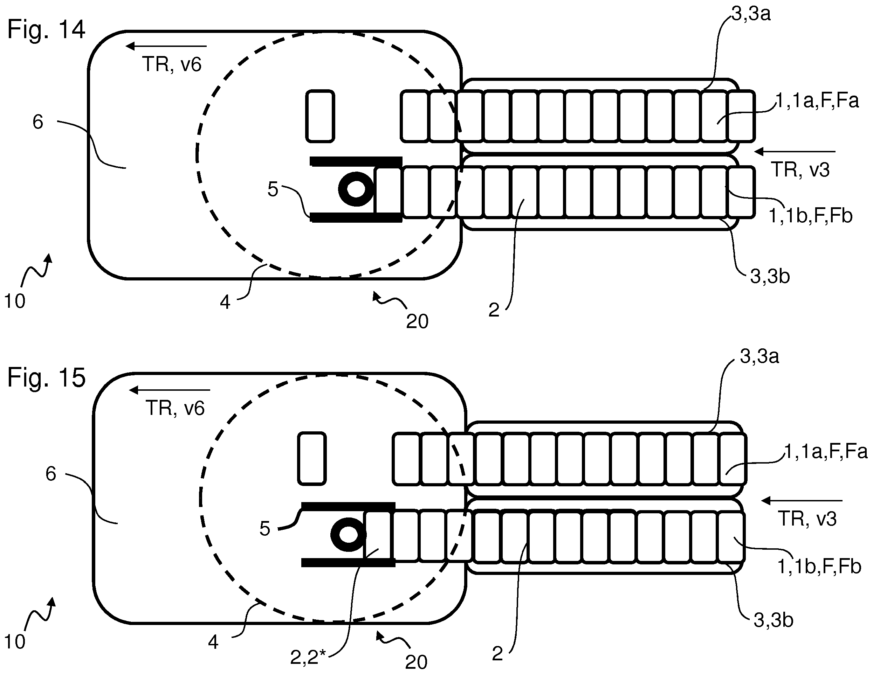

Wie in Fig. 13 dargestellt, löst sich der Manipulator 5 von dem an die Zielposition P1 beförderten Stückgut 2*, um nunmehr, wie in den Figuren 14 bis 18 dargestellt, ein Stückgut 2, 2* aus der einlaufenden Formation Fb abzugreifen und dieses unter Drehung in eine Zielposition P2 und entsprechende Zielausrichtung zu befördern. Dabei wird das transportierte Stückgut 2* unter gleichzeitiger Drehbewegung um einen Winkel von zumindest näherungsweise 90° in die definierte relative Zielposition P2 und/oder Zielausrichtung gegenüber den nachfolgenden Stückgütern 2 der Formation Fb gebracht. Auch hierbei erfolgt eine Drehbewegung um eine vorzugsweise in etwa vertikale Achse, wobei die Achse der Drehbewegung im Verlauf der Drehbewegung zusätzlich zumindest zeit- und/oder abschnittsweise in Richtung der definierten Zielposition P2 bewegt wird. Insbesondere kann vorgesehen sein, dass die Achse im Verlauf der Drehbewegung zumindest zeitweise in Richtung der definierten Zielposition P2 mit einer Geschwindigkeit bewegt wird, die größer ist als die Transportgeschwindigkeit v3 der einlaufenden geschlossenen Formation F. Alternativ oder zusätzlich kann vorgesehen sein, dass die Achse im Verlauf der Drehbewegung zumindest zeitweise in einer bestimmten Position verweilt.

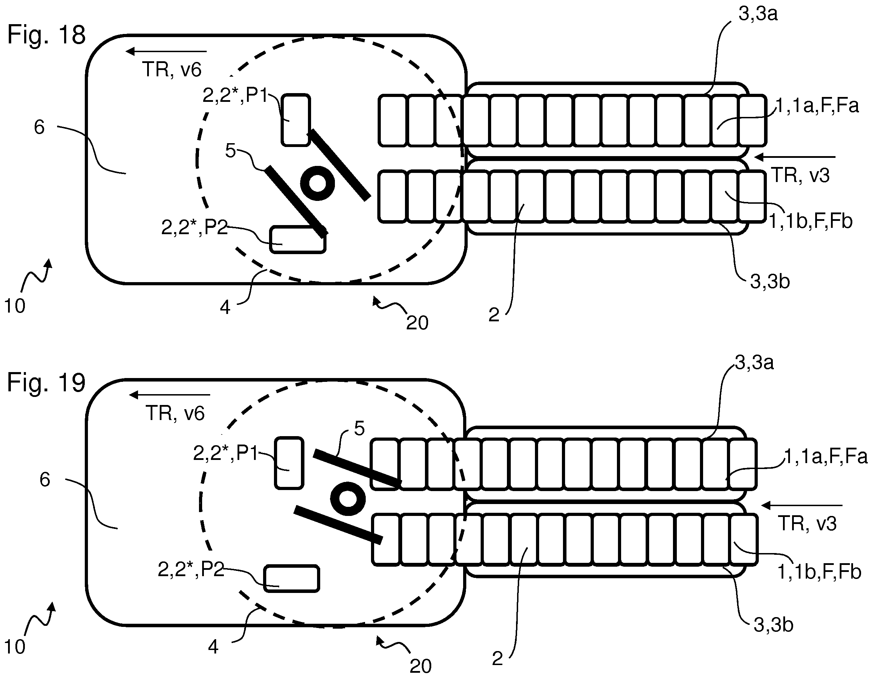

Wie in den Figuren 18 und 19 dargestellt, löst sich der Manipulator 5 von dem an die Zielposition P2 beförderten Stückgut 2*, um nunmehr, wie in den Figuren 20 bis 22 dargestellt, zwei Stückgüter 2, 2* aus der einlaufenden Formation Fa abzugreifen und diese unter Drehung in eine Zielposition P3 und entsprechende Zielausrichtung zu befördern.

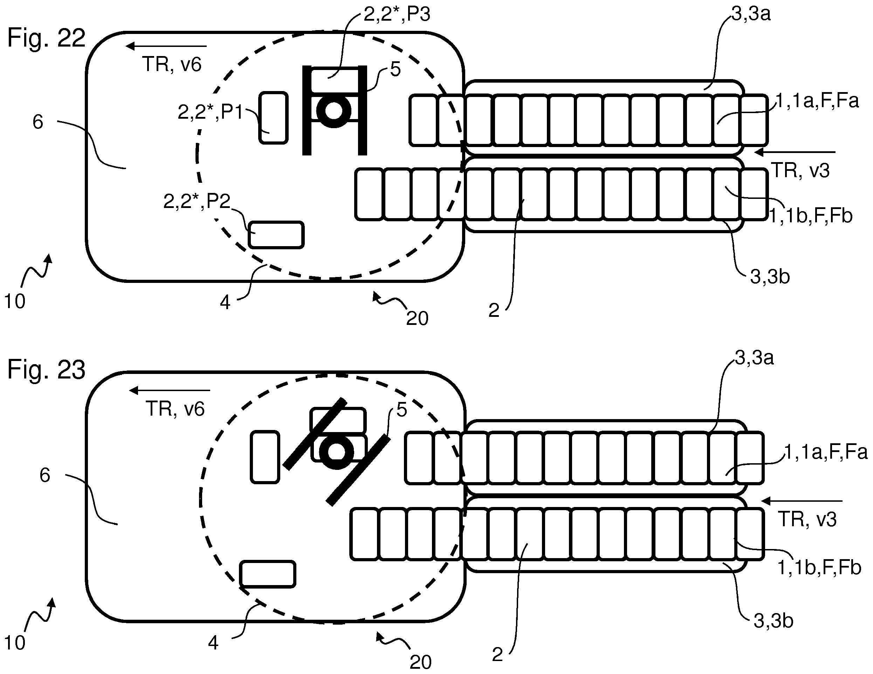

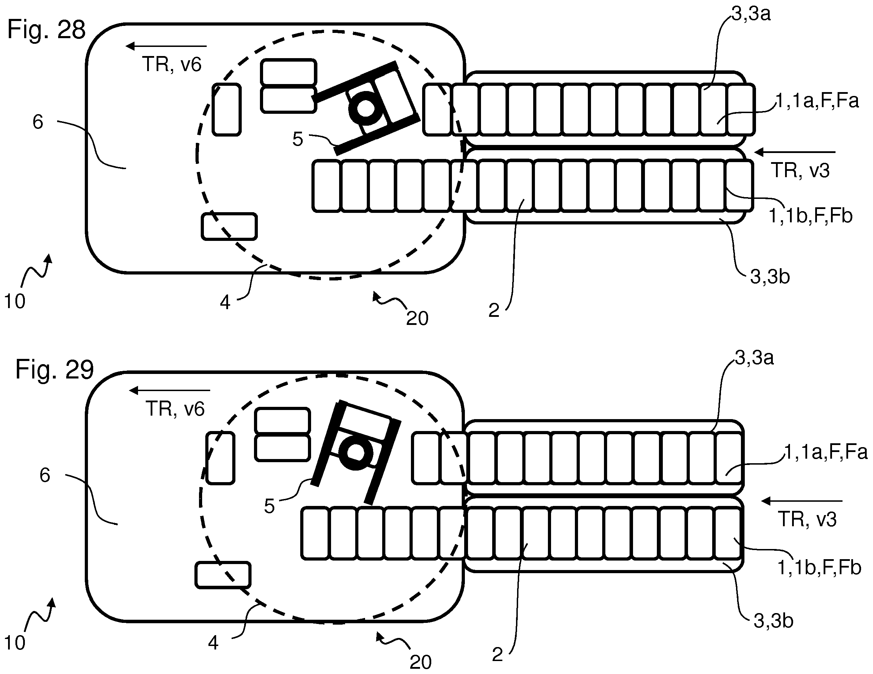

In den Figur 23 bis 27 ist dargestellt, dass sich der Manipulator 5 nunmehr wiederum zu der einlaufenden geschlossenen Formation Fa bewegt und von dieser die vordersten beiden Stückgüter 2, 2* greift und diese gemäß Figuren 28 bis 30 unter Drehung in eine Zielposition P4 und entsprechende Zielausrichtung auf der Horizontalfördereinrichtung 6 befördert.

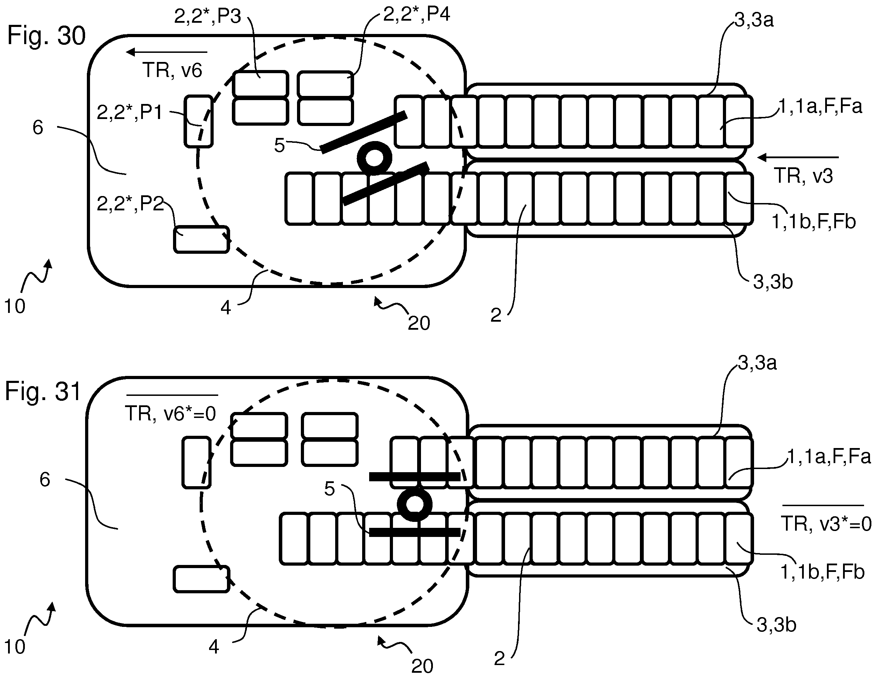

Anhand der Fig. 30 und der folgenden Figuren kann nun eine vorübergehende Systemunterbrechung anhand eines auftretenden Störungsereignisses veranschaulicht werden, wie es etwa bei einer Unterbrechung der elektrischen Energieversorgung auftreten kann. Ein solches Störungsereignis ist zumindest mit einem zumindest vorübergehenden Stillstand der Horizontalfördereinrichtung 6, der vorgeordneten Transporteinrichtungen 3, 3a, 3b sowie der gesamten Handhabungseinrichtung 10 mitsamt dem Manipulator 5 verbunden, da ihnen die Stromversorgung für ihre jeweiligen Antriebe fehlt. In einem solchen Fall wird die gesamte Handhabungseinrichtung 10 neu initialisiert, wozu u.a gehört, dass sich der Manipulator 5 von Stückgütern 2, 2* löst, wenn er noch solche zwischen seinen Greiferarmen hat, und in eine Startposition bewegt wird, wie dies in Fig. 31 angedeutet ist. Diese Startposition kann sich in nahezu beliebiger Stelle befinden, bspw. auch zentriert zum Erfassungsbereich 4, wahlweise auch an dessen Rand. Während dieser Initialisierung bleiben die Transporteinrichtungen 3, 3a, 3b und die Horizontalfördereinrichtung 6 zunächst noch stehen, so dass sowohl die Geschwindigkeit v3* der Transporteinrichtungen 3, 3a, 3b, als auch die Geschwindigkeit v6* der Horizontalfördereinrichtung jeweils Null sind (v3* = 0 und v6* = 0).

Erst nach behobener Störung bzw. nach Wiederherstellung der Energieversorgung laufen die Transporteinrichtungen 3, 3a, 3b mit reduzierter Geschwindigkeit v3* (v3* < v3) langsam wieder an, während auch die Horizontalfördereinrichtung 6 wieder mit reduzierter Geschwindigkeit v6* (v6* < v6) langsam wieder anläuft. Hierbei kann wie zuvor gelten, dass die reduzierten Geschwindigkeiten v3* und v6* in etwa übereinstimmen, da die auf den Transporteinrichtungen 3, 3a und 3b herantransportierten Stückgüter 2 möglichst nicht an der Horizontalfördereinrichtung 6 aufgestaut werden sollen.

Da der gesamte Gruppierungsprozess nach behobener Störung selbsttätig wieder anlaufen und der zuvor unterbrochene Handhabungs- und/oder Positionsveränderungsprozess für die Stückgüter 2 ohne manuelle Eingriffe fortgesetzt werden soll, setzt die Handhabungseinrichtung 10 nach erfolgter Initialisierung den zuvor unterbrochenen Handhabungs- und/oder Positionierungsprozess für die Stückgüter 2 an der unterbrochenen Stelle fort. Hierzu ist es erforderlich, dass in diesem sog. Reparaturmodus oder Restart-Modus gespeicherte Positionswerte aller Stückgüter 2 und 2* sowie Positionswerte für alle beweglichen Teile der Handhabungseinrichtung 10 inkl. des Manipulators 5 nach deren Initialisierung abgerufen werden können, was eine Fortsetzung des zuvor unterbrochenen Positionierungsprozesses erlaubt. Auf diese Weise kann jeder begonnene und durch das aufgetretene Störungsereignis unterbrochene Arbeitstakt nach Initialisierung der Handhabungseinrichtung 10 weitergeführt und beendet werden, vorzugsweise mit reduzierten Geschwindigkeiten v3* und v6* der Transporteinrichtungen 3, 3a, 3b und der Horizontalfördereinrichtung 6 und mit ggf. entsprechend reduzierten Stellgeschwindigkeiten des Manipulators 5.

Die Positionswerte P1, P2, P3 etc. der Stückgüter 2, 2* auf der Horizontalfördereinrichtung 6 können durch entsprechende Abfragen der zuvor durchgeführten und abgespeicherten Bewegungskurven des Manipulators 5 ermittelt werden, ggf. auch zusätzlich durch optische Sensoren und/oder eine hierfür ausgerüstete Bildverarbeitung, die den Erfassungsbereich 4 abdeckt. Gleiches gilt für die in den Erfassungsbereich 4 eintretenden und ggf. noch teilweise auf den Transporteinrichtungen 3, 3a, 3b befindlichen Stückgütern 2, die vorzugsweise ebenfalls optisch und/oder mittels geeigneten Sensoren erfasst werden können. Wichtig ist es zudem, dass die Handhabungseinrichtung 10 nach behobener Störung und nach erfolgter Initialisierung mittels einer Abfrage der Signalwerte von Absolutwertgebern, die dem Manipulator 5 zugeordnet sind, die exakte Position des Manipulators 5 im Erfassungsbereich 4 bestimmen kann, um diese Position mit dem Status des Gruppierungsprozesses und den Positionen der bereits positionierten und der noch zu positionierenden Stückgüter 2, 2* in Zusammenhang zu bringen, und um die durch das Störungsereignis unterbrochenen Prozessabläufe Bewegungsabläufe in der jeweils unterbrochenen Phase fortsetzen zu können.

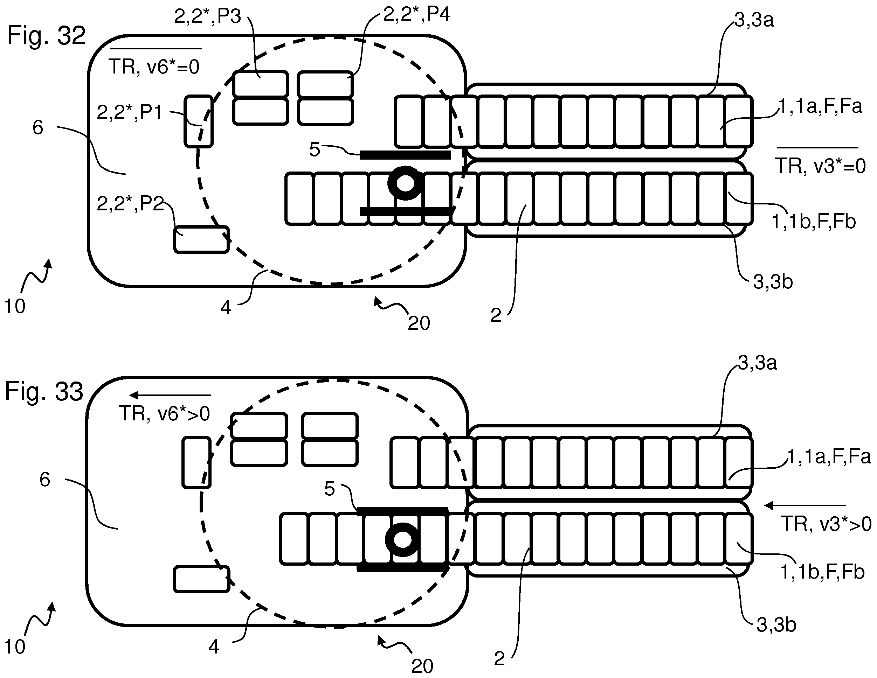

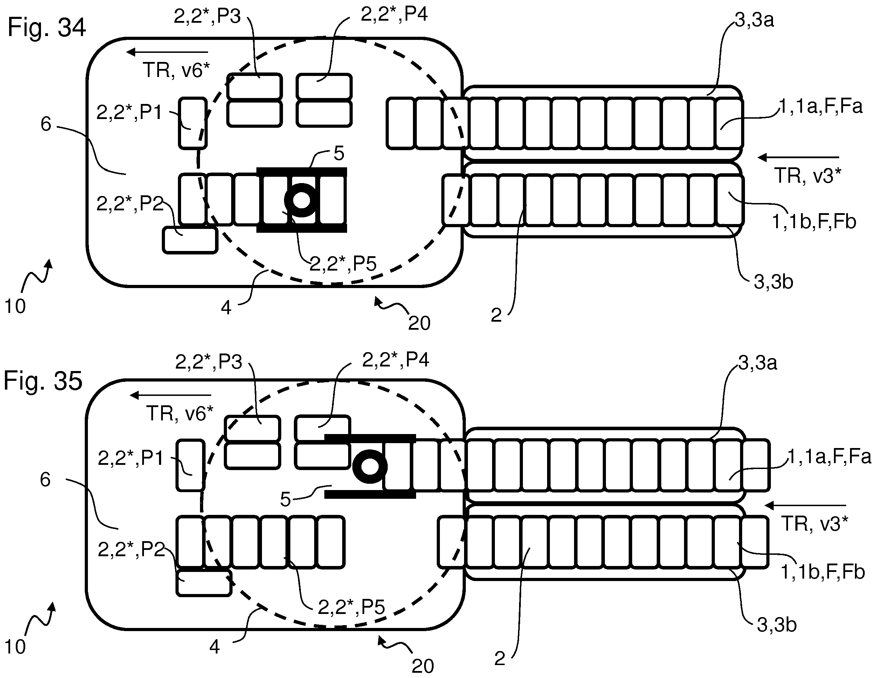

Die Fig. 32 verdeutlicht die Rückbewegung des Manipulators 5 an die in der nächsten Prozessphase zu erfassenden Stückgüter 2, während die Geschwindigkeiten v6* der Horizontalfördereinrichtung 6 sowie v3* der Transporteinrichtungen 3, 3a, 3b vorzugsweise noch jeweils Null sind. Nach Erreichen der gewünschten Erfassungsposition des Manipulators 5 (Fig. 33) kann der Prozess langsam wieder anlaufen, was auch durch die reduzierten Geschwindigkeiten v6* (v6* > 0) der Horizontalfördereinrichtung 6 sowie v3* (v3* > 0) der Transporteinrichtungen 3, 3a, 3b angedeutet ist. Bei vorzugsweise noch immer reduzierten Geschwindigkeiten v3* und v6* kann der unterbrochene Greif- und Verschiebeprozess an der unterbrochenen Stelle durch erneutes Greifen und Verschieben der Stückgüter 2 abgeschlossen werden (vgl. Fig. 34), wonach sich an den fertig gestellten Greif- und Verschiebeprozess der im Lagenbildungsprozess folgende nächste Greif- und Verschiebeprozess anschließen kann (vgl. Figuren 35 bis 38).

Die weiteren Lagenbildungsprozesse in diesem Takt können bis zur Bildung der fertigen Lage 12 (vgl. Fig. 1) vorzugsweise bei weiterhin reduzierten Geschwindigkeiten v3* und v6* ablaufen, bis der nachfolgende Takt wieder mit den ursprünglichen Geschwindigkeiten v3 und v6 ablaufen kann, wobei diese Geschwindigkeiten v3 und v6 höher sind als die reduzierten Geschwindigkeiten v3* und v6* im Reparatur- bzw. Aufräummodus.

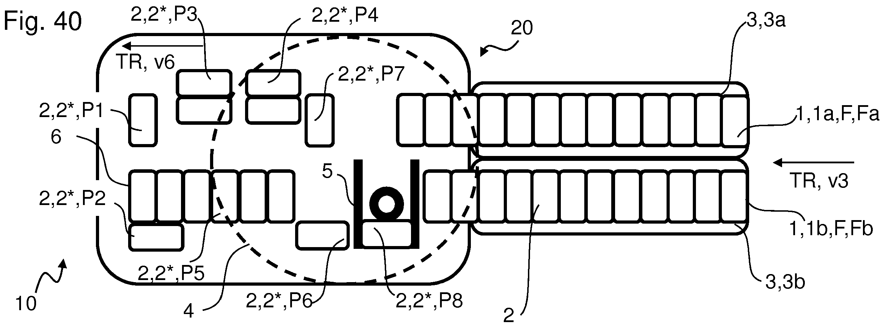

Nach weiteren Manipulationsschritten (nicht gezeigt) kann gemäß Fig. 40 die bereits in Fig. 1 dargestellte Ziellage 12 weitgehend als lose Anordnung vorbereitet sein. Durch Zusammenschieben mit geeigneten Schiebern wird in einem nicht dargestellten weiteren Verfahrensschritt die gewünschte geschlossene Lage 12 erzeugt und kann für die weitere Verarbeitung beispielsweise auf eine Palette überführt werden.

Bei den beschriebenen Manipulationsschritten werden die erfassten Stückgüter 2* vorzugsweise jeweils in einem einzigen, insbesondere unterbrechungsfreien, Manipulationsschritt in die Zielposition P1 bis P8 und/oder Zielausrichtung überführt, geschoben und/oder gedreht. Hierbei kann vorgesehen sein, dass der Manipulator 5 die erfassten Stückgüter 2* beispielsweise anhebt, zu einer Zielposition P1 bis P8 befördert und auf der Horizontalfördereinrichtung 6 innerhalb des Erfassungsbereiches 4 wieder absetzt. Alternativ kann vorgesehen sein, dass der Manipulator 5 die Stückgüter 2* auf der Horizontalfördereinrichtung 6 verschiebt, indem er insbesondere eine Geschwindigkeitskomponente und/oder eine Richtungskomponente und/oder Drehbewegungskomponente auf die abgegriffenen Stückgüter 2* aufbringt. Insbesondere bei dem gleichzeitigen Verschieben von durch den Manipulator 5 erfassten Stückgütern und mindestens einem weiteren mit diesem in Oberflächenkontakt stehenden Stückgut 2 ist im Wesentlichen kein Anheben der erfassten Stückgüter 2* vorgesehen. Stattdessen werden diese nur auf der Horizontalfördereinrichtung 6 verschoben.

Die Zielpositionen P1 bis P8 stellen jeweils eine Relativposition gegenüber der Formation Fa bzw. Fb dar. Da sich die Transporteinrichtungen 3a, 3b und somit die Formationen Fa, Fb mit derselben Geschwindigkeit bewegen wie die Horizontalfördereinrichtung 6, bleibt der relative Abstand zwischen den Stückgütern 2* in ihrer jeweiligen Zielposition P1 bis P8 und einem noch nicht vom Manipulator 5 erfassten Stückgut 2 der Formationen Fa, Fb im weiteren Ablauf immer gleich, obwohl sich alle Stückgüter 2, 2* kontinuierlich weiter bewegen.

In dem Zeitfenster zwischen dem Erfassen von Stückgütern 2* durch den Manipulator 5 und deren Freigabe in der jeweiligen Zielposition P1 bis P8 ist die Geschwindigkeit des Manipulators 5 gegenüber der Transportgeschwindigkeit v3 der Formationen Fa, Fb erhöht. Die Bewegungsrichtung des Manipulators 5 beim Befördern der Stückgüter 2* der Formation F in eine Zielposition P1 bis P8 ergibt sich beispielsweise aus einer ersten Bewegungskomponente parallel zur Transportrichtung TR der Formation Fb und einer zweiten Bewegungskomponente senkrecht zur Transportrichtung TR der Formation F. Dadurch können die vom Manipulator 5 erfassten Stückgüter 2* in eine definierte Zielposition im Erfassungsbereich 4 des Manipulators 5 bewegt werden, die sich in Transportrichtung TR beabstandet vor der Formation F und seitlich verschoben zur Formation F befindet. Ist die zweite Bewegungskomponente senkrecht zur Transportrichtung TR der Formation F gleich Null, dann werden die erfassten Stückgüter 2* in eine Position verschoben, die sich in einer Flucht zur jeweiligen Formation F befindet (vergleiche beispielsweise Figuren 31 und 32).

Weiterhin kann vorgesehen sein, dass sich der Manipulator um eine Drehachse dreht, die senkrecht zur Ebene der Horizontalfördereinrichtung 6 ausgebildet ist und dadurch eine entsprechende Umpositionierung der erfassten Stückgüter 2* bewirkt. In Abhängigkeit davon, ob zusätzliche Bewegungskomponenten auf den Manipulator 5 aufgebracht werden, sind die derart bewegten Stückgüter 2* in einer Flucht zur jeweiligen Formation F angeordnet (vergleiche Figuren 8 bis 12) oder aber seitlich verschoben dazu angeordnet.

Gemäß einer weiteren nicht dargestellten Ausführungsform kann vorgesehen sein, dass der Manipulator 5 nach Verschieben einer Gruppe von erfassten Stückgüter 2* und mindestens einem vom Manipulator 5 nicht erfassten Stückgut 2, das in Oberflächenkontakt mit einem erfassten Stückgut 2* steht, sich von der Gruppe löst, anschließend erneut mindestens ein Stückgut 2, 2* dieser Gruppe erfasst und dieses dreht und/oder gegenüber der Gruppe verschiebt o.ä.

Auch kann ein Manipulator 5 mit erfassten Stückgütern 2* verwendet werden, um mindestens ein bereits in einem vorhergehenden Schritt in einer Zielposition angeordnetes Stückgut 2 durch Oberflächenkontakt zwischen dem vom Manipulator 5 erfassten Stückgut 2* und dem bereits auf der Horizontalfördereinrichtung 6 in einer ersten Zielposition angeordneten Stückgut 2 in eine neue Zielposition zu verschieben. Der Manipulator 5 setzt anschließend das erfasste Stückgut 2* an der neuen Zielposition frei, so dass ein Oberflächenkontakt zwischen dem bereits in einem vorhergehenden Schritt in einer Zielposition angeordnetem Stückgut 2 und dem weiteren Stückgut 2* bestehen bleibt.

Während der Positionierung der vom Manipulator 5 erfassten Stückgüter 2* werden die mindestens eine Transporteinrichtung 3 und die Horizontalfördereinrichtung 6 weiterhin konstant betrieben.

Die Geschwindigkeit v3, v6 ist dabei so gewählt, dass der Manipulator 5 innerhalb des ihm zur Verfügung stehenden Arbeitsbereichs ausreichend Zeit hat, um die Stückgüter 2* zu verschieben. Bevorzugt besteht der Manipulator 5 aus einem Deltakinematik-Roboter (vgl. Fig. 41), um hoch dynamische Verschiebebewegungen zu realisieren und möglichst schnelle Taktzeiten zu ermöglichen.

Wenn im vorliegenden Fall bzw. generell im Zusammenhang der vorliegenden Erfindung generalisierend von einem Manipulator 5 die Rede ist, kann es sich konkret bei dem zur Überführung des mindestens einen Stückgutes 2, 2*, 2a in die Zielposition P, Pa und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators), der die Stückgüter 2, 2*, 2a in der gewünschten Weise erfassen, verschieben, positionieren, platzieren, drehen etc. kann, um die jeweiligen Zielpositionen P, Pa und/oder Zielausrichtungen für die Stückgüter 2, 2*, 2a anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Die Figuren 2 bis 41 zeigen verschiedene Ansichten einer Ausführungsform eines Manipulators 5, 50 einer Handhabungseinrichtung 10 und/oder Manipulationsvorrichtung (gemäß einer der voranstehenden Figuren) zur Durchführung einer Variante oder mehrerer Varianten des erfindungsgemäßen Verfahrens. So zeigt die Fig. 41 eine schematische Perspektivansicht der Vorrichtung bzw. eines Deltakinematik-Roboters. Es sei an dieser Stelle darauf hingewiesen, dass die in der Fig. 41 beispielhaft erläuterte Ausführungsvariante der Vorrichtung zur Durchführung zumindest einiger Varianten des erfindungsgemäßen Verfahrens sich auf einen Deltaroboter, einen sog. Tripod bzw. auf einen Deltakinematik-Roboter mit drei gleichartigen Schwenkarmen beziehen, der einen Teil einer Handhabungseinrichtung bzw. eines Manipulators 5 zur Handhabung, zum Drehen, Verschieben oder Aufnehmen von Artikeln, Stückgütern 2 oder Gebinden bilden oder diese Handhabungseinrichtung bzw. diesen Manipulator enthalten kann. Hinsichtlich einer möglichen Ausgestaltung des Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 41 gemäß Figur 41 auch vier gleichartige Stellarme aufweisen.

Im Folgenden ist der die Vorrichtung 41 bildende bzw. diese Vorrichtung 41 enthaltende Roboter, der gleichzeitig einen Teil der Handhabungseinrichtung 10 bildet bzw. den Manipulator 5 enthält, umfasst bzw. davon einen Teil bilden kann, allgemein mit der Bezugsziffer 42 bezeichnet. Es sei darauf hingewiesen, dass der mit der Bezugsziffer 42 bezeichnete Roboter auch als Deltaroboter 42, als Deltakinematik-Roboter 42, als Parallelkinematik-Roboter 42 oder auch als Tripod 42 (vgl. hierzu Fig. 41) bezeichnet sein kann.

Die Fig. 41 zeigt eine schematische Perspektivansicht einer Ausführungsform einer Vorrichtung 41 bzw. eines Deltakinematik-Roboters 42 zur Durchführung des erfindungsgemäßen Verfahrens. Die Vorrichtung 41 bzw. der Deltakinematik-Roboter 42 ist bspw. ausgebildet zum Greifen, Drehen und Versetzen zu Gebinden zusammengefasster Getränkebehältnisse, die in Fig. 41 nicht mit dargestellt sind. Die Vorrichtung 41 bzw. der Deltakinematik-Roboter 42 kann jedoch ebenso auch zum Greifen, Drehen und Versetzen von beliebigen Artikeln oder Stückgütern eingesetzt werden.

Wie in Fig. 41 zu erkennen, besitzt die Vorrichtung 41 bzw. der Deltakinematik-Roboter 42 eine obere Aufhängung 43. An der oberen Aufhängung 43 sind drei Stellarme 45 über einen jeweils zugeordneten Antrieb 48 drehbar befestigt. Die drehende Bewegung der Stellarme 45 erfolgt hierbei derart, dass ihre Drehachsen parallel zueinander verlaufen. Weiter bestehen die drei Stellarme 45 aus wenigstens zwei relativ zueinander schwenkbaren Armabschnitten 47 und 49, wobei die unteren Armabschnitte 47 bzw. Unterarme 47 jeweils aus zwei parallel zueinander orientierten Gestängen gebildet sind. Der jeweilige obere Armabschnitt 49 bzw. Oberarm 49 steht mit seinem jeweils zugeordneten Antrieb 48 in Verbindung bzw. ist an seinem jeweils zugeordneten Antrieb 48 angeflanscht. Zudem können die drei Stellarme 45 unabhängig voneinander bewegt werden. Sämtliche Antriebe 48 stehen hierzu mit einer Steuerungseinheit in Verbindung, welche die Bewegung der Stellarme 45 vorgibt und die Antriebe 48 ansteuert.

Am unteren Ende der drei Stellarme 45 steht ein Manipulator 50 mit den drei Stellarmen 45 derart in Verbindung, dass der Manipulator 50 über eine Bewegung der drei Stellarme 45 zur Handhabung von Artikeln verfahren werden kann. Die in Fig. 41 nicht dargestellte Steuerungseinheit gibt daher die Bewegung der Stellarme 45 in Abhängigkeit einer für den Manipulator 50 vorgesehenen Position zum Greifen und Handhaben von Stückgütern 2 vor. Sämtliche der drei Stellarme 45 sind über einen Tragring 57 mit einer Basis 60 des Manipulators 50 mechanisch gekoppelt. Die mechanische Verbindung bzw. Koppelung zwischen dem Tragring 57 und der Basis 60 des Manipulators 50 ist derart, dass diese eine relative Verdrehung des Manipulators 50 gegenüber dem Tragring 57 erlaubt. Der Tragring 57 kann auch als Tool-Center-Point der Vorrichtung 41 bezeichnet werden.

In etwa mittig ist der Manipulator 50 an eine Linearführung 56 drehfest angeflanscht, wobei die Linearführung 56 als erste Welle 54 ausgebildet ist und somit der Manipulator 50 über die erste Welle 54 gedreht werden kann.

Weiter ist eine als zweite Welle 58 ausgebildete Betätigungseinrichtung 52 vorgesehen, mittels welcher Klemmbacken 62 und 64 zum Schließen und Öffnen angesteuert werden können. Die Drehachsen der ersten Welle 54 sowie der als zweite Welle 58 ausgebildeten Betätigungseinrichtung 52 sind identisch. Die erste Welle 54 und die zweite Welle 58 sind koaxial zueinander orientiert bzw. angeordnet. Da über die als zweite Welle 58 ausgebildete Betätigungseinrichtung 52 der Manipulator 50 bzw. die sich gegenüberliegenden Klemmbacken 62 und 64 des Manipulators 50 angesteuert werden können, sind keine pneumatischen, hydraulischen oder elektrischen Leitungsverbindungen notwendig, die zur Ansteuerung des Manipulators 50 bzw. der Klemmbacken 62 und 64 mit dem Manipulator 50 in Verbindung stehen.

Vorteilhafterweise besteht hierbei die Möglichkeit, den Manipulator 50 zusammen mit seinen Klemmbacken 62 und 64 über die erste Welle 54 um mehr als 360° zu drehen, da keine Leitungsverbindungen eine vollständige Umdrehung behindern. Hierdurch kann gegenüber aus dem Stand der Technik bekannten Vorrichtungen der Durchsatz bei Handhabung von Artikeln deutlich verbessert werden, da der Manipulator 50 nicht zurückgedreht werden muss, um diesen in eine Ausgangsorientierung zu überführen.

Wie erwähnt, können bei der in Fig. 41 gezeigten Ausführungsform die beiden Klemmbacken 62 und 64 durch eine Rotation der als zweite Welle 58 ausgebildeten Betätigungseinrichtung 52 relativ zueinander verstellt werden bzw. aufeinander zu bewegt und voneinander weg bewegt werden. Die jeweilige Bewegung der Klemmbacken 62 und 64 bei Ansteuerung über die als zweite Welle 58 ausgebildete Betätigungseinrichtung 52 ist vorliegend mittels Pfeildarstellung verdeutlicht. Beide Klemmbacken 62 und 64 sind an der Basis 60 des Manipulators 50 hängend und linear beweglich befestigt. Eine Ansteuerung der Klemmbacken 62 und 64 erfolgt über mit der zweiten Welle 58 in Verbindung stehende Übersetzungsstufen eines Getriebes, die in Figur 45 nicht zu erkennen sind und ein Drehmoment der zweiten Welle 58 auf eine Stellbewegung der Klemmbacken 62 und 64 übertragen.

Die Linearführung 56 bzw. die erste Welle 54 umfasst zwei Gehäuseteile 44 und 46, die miteinander teleskopierbar in Verbindung stehen und jeweils einen Hohlraum zur Aufnahme der als zweite Welle 58 ausgebildeten Betätigungseinrichtung 52 bereitstellen. Über ein kardanisch wirkendes Gelenk ist die als zweite Welle 58 ausgebildete Betätigungseinrichtung 52 an den Manipulator 50 und an einen Aktor 70 gekoppelt.

Der Aktor 70 sitzt drehfest auf der oberen Aufhängung 43 auf. Über den Aktor 70 kann das als zweite Welle 58 ausgebildete Betätigungsglied 52 drehend bewegt werden, womit die Klemmbacken 62 und 64 des Manipulators 50 zum Greifen oder Freigeben von Artikeln verfahren werden.

Normalerweise muss die zweite Welle 58, welche zum Schließen und Öffnen der Klemmbacken 62 und 64 des Manipulators 50 bzw. des Greifers dient, bei einer Drehung des Greifers oder Manipulators 50 durch Betätigung der ersten Welle 54 eine Ausgleichsbewegung durchführen. Diese Ausgleichsbewegung erfolgt als Relativbewegung gegenüber der ersten Welle 54 im Gleichlauf, im Gegenlauf oder synchron. Die Richtung der Ausgleichsbewegung hat je nach gewünschter Funktion zu erfolgen. Werden z.B. die Klemmbacken 62 und 64 durch eine Drehbewegung der zweiten Welle 58 entgegen dem Uhrzeigersinn geschlossen und der Manipulator 50 bzw. der Greifer gleichzeitig durch Drehung der ersten Welle 54 entgegen dem Uhrzeigersinn gedreht, so muss die zweite Welle 58 bei der Drehung des Manipulators 50 ebenfalls eine Drehung entgegen dem Uhrzeigersinn durchführen, um zu verhindern, dass sich die Klemmbacken 62 und 64 öffnen. Analog dazu ist eine Drehung im Uhrzeigersinn umzusetzen. Die erforderlichen Drehrichtungen der Wellen 54 und 58 sind abhängig von der technischen Ausführung der Umsetzung der Drehbewegung der zweiten Welle 58 in eine Linearbewegung der Klemmbacken 62 und 64.

Anstelle der gezeigten Vorrichtung 41 kann der Manipulator 5 selbstverständlich auch durch einen Portalroboter-Greifarm oder einen anderen geeigneten beweglichen Greifer gebildet sein, der in der Lage ist, die gewünschten Positionierungsbewegungen für die Stückgüter 2 durchzuführen.

Nach einem Störungsereignis wie etwa dem Ausfall der Energieversorgung ist es wichtig, die Initialisierungsposition (vgl. Fig. 31) erreichen und diese exakt definieren zu können. Um dies zu garantieren, sind alle Antriebe 48 des Roboters 42 sowie der Aktor 70 sinnvollerweise mit Absolutwertgebern oder anderen geeigneten Sensoren ausgestattet, die zu jedem Zeitpunkt eine exakte Positionsbestimmung erlauben, so dass die Position des Roboters 42 jederzeit in Bezug zu den jeweils erfassten Positionen P1 bis P8 ff. der Stückgüter 2, 2* gebracht werden kann, um nach behobener Systemunterbrechung den Positionierungsprozess an der unterbrochenen Stelle fortsetzen zu können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1, 1a, 1b: Reihe
- 2, 2*: Stückgut, Gebinde
- 3, 3a, 3b: Transporteinrichtung
- 4: Erfassungsbereich
- 5: Manipulator
- 6: Horizontalfördereinrichtung
- 8: Flasche
- 9: Schrumpffolie
- 10: Handhabungseinrichtung
- 12: Lage
- 20: Gruppiermodul
- 41: Vorrichtung
- 42: Roboter, Deltaroboter, Deltakinematik-Roboter, Parallelkinematik-Roboter, Tripod
- 43: Aufhängung, obere Aufhängung
- 44: erstes Gehäuseteil
- 45: Stellarm
- 46: zweites Gehäuseteil
- 47: unterer Armabschnitt, Unterarm
- 48: Antrieb
- 49: oberer Armabschnitt, Oberarm
- 50: Manipulator
- 52: Betätigungsglied, Betätigungseinrichtung
- 54: Welle, erste Welle, äußere Welle, äußere erste Welle
- 56: Linearführung
- 57: Tragring
- 58: Welle, weitere Welle, zweite Welle, innere zweite Welle
- 59: Kontaktelement
- 60: Basis
- 62: Klemmbacke
- 64: Klemmbacke
- 70: Aktor

- F,Fa,Fb: Formation
- P1 bis P8: Zielposition, Zielpositionen
- TR: Transportrichtung
- v3, v3*: Transportgeschwindigkeit
- v6, v6*: Geschwindigkeit

## Patentansprüche

1. Verfahren zum Umgang mit und/oder zur Handhabung von Stückgütern (2, 2*), die in mindestens einer Reihe (1, 1a, 1b) hintereinander in einer Transportrichtung (TR) auf einer Horizontalfördereinrichtung (6) bewegt werden, wobei bei dem Verfahren
- bei jedem Arbeitstakt jeweils wenigstens ein transportiertes Stückgut (2, 2*) mittels mindestens einer Handhabungseinrichtung (10) aus der mindestens einen Reihe (1, 1a, 1b) klemmend und/oder kraft- und/oder formschlüssig erfasst, von der Reihe (1, 1a, 1b) räumlich abgetrennt und in eine definierte relative Zielposition (P, P1, P2, P3, P4, P5, P6, P7, P8) und/oder Zielausrichtung gegenüber nachfolgenden Stückgütern (2, 2*) gebracht wird,
- wonach das mindestens eine abgetrennte und bewegte Stückgut (2, 2*) in gleicher Transportrichtung (TR) wie zuvor weitertransportiert wird,
**dadurch gekennzeichnet, dass**:
- alle Positionen und/oder erreichten Zielpositionen (P, P1, P2, P3, P4, P5, P6, P7, P8) der auf der Horizontalfördereinrichtung (6) befindlichen und/oder in einem Erfassungsbereich (4) der Handhabungseinrichtung (10) befindlichen Stückgüter (2, 2*) jeweils zwischengespeichert werden und nach behobener Störung zur Fortsetzung der Prozessabläufe und für die Steuerung der Bewegungsabläufe der Handhabungseinrichtung (10) abgerufen werden;
- wobei nach einem aufgetretenen Störungsereignis mit einem zumindest vorübergehenden Stillstand der Horizontalfördereinrichtung (6) und der Handhabungseinrichtung (10) die Handhabungseinrichtung (10) initialisiert wird,
- und wobei nach behobener Störung die Horizontalfördereinrichtung (6) selbsttätig wieder anfährt und der zuvor unterbrochene Handhabungs- und/oder Positionsveränderungsprozess fortgesetzt wird.

2. Verfahren nach Anspruch 1, bei dem die Horizontalfördereinrichtung (6) nach behobener Störung selbsttätig und automatisch wieder anfährt, und bei dem die Handhabungseinrichtung (10) nach erfolgter Initialisierung den zuvor unterbrochenen Handhabungs- und/oder Positionierungsprozess für die Stückgüter (2, 2*) an der unterbrochenen Stelle fortsetzt.

3. Verfahren nach Anspruch 1 oder 2, bei dem das Verfahren nach behobener Störung für einen definierten Zeitraum in einem Reparaturmodus läuft, bei dem im Wesentlichen nur diejenigen Komponenten aktiviert sind, die zur Herstellung eines regulären Produktionsmodus notwendig sind.

4. Verfahren nach Anspruch einem der voranstehenden Ansprüche, bei dem zumindest die Horizontalfördereinrichtung (6) nach behobener Störung mit reduzierter Geschwindigkeit (v6*) anfährt und für einen definierten Zeitraum mit gegenüber dem regulären Produktionsmodus reduzierter Vorschubgeschwindigkeit (v6*) läuft.

5. Verfahren nach Anspruch 4, bei dem die Handhabungseinrichtung (10) bei mit reduzierter Vorschubgeschwindigkeit (v6*) angelaufener Horizontalfördereinrichtung (6) mit reduzierter Positionierungsgeschwindigkeit anfährt und für einen definierten Zeitraum mit gegenüber dem regulären Produktionsmodus reduzierter Positionierungsgeschwindigkeit betrieben wird.

6. Verfahren nach einem der voranstehenden Ansprüche, bei dem im Reparaturmodus gespeicherte Positionswerte und/oder Zielpositionen (P, P1, P2, P3, P4, P5, P6, P7, P8) aller Stückgüter (2, 2*) sowie wenigstens ein Positionswert der Handhabungseinrichtung (10) nach deren Initialisierung abgerufen werden.

7. Verfahren nach einem der Ansprüche 1 bis 6, bei dem jeder begonnene und durch das aufgetretene Störungsereignis unterbrochene Arbeitstakt nach Initialisierung der Handhabungseinrichtung (10) weitergeführt und/oder beendet wird.

8. Verfahren nach Anspruch 6 oder 7, bei dem die Handhabungseinrichtung (10) nach behobener Störung und nach erfolgter Initialisierung mittels einer Abfrage der Signalwerte von beweglichen Abschnitten zumindest der Handhabungseinrichtung (10) zugeordneten Absolutwertgebern die durch das Störungsereignis unterbrochenen Prozessabläufe und/oder Bewegungsabläufe in der jeweils unterbrochenen Phase fortsetzt.

9. Verfahren nach einem der Ansprüche 3 bis 8, bei dem im Reparaturmodus mittels Bildverarbeitung die Positionen und/oder Zielpositionen (P, P1, P2, P3, P4, P5, P6, P7, P8) aller Stückgüter (2, 2*) erfasst und in Bezug zu den Bewegungen der Handhabungseinrichtung (10) gebracht werden.

10. Verfahren nach einem der Ansprüche 1 bis 7, bei dem im Reparaturmodus mittels mindestens einen parallel zur Horizontalfördereinrichtung (6) beweglichen Sensors die Positionen und/oder Zielpositionen (P, P1, P2, P3, P4, P5, P6, P7, P8) aller Stückgüter (2, 2*) erfasst und in Bezug zu den Bewegungen der Handhabungseinrichtung (10) gebracht werden.

11. Handhabungssystem zum Umgang mit und/oder zur Handhabung von Stückgütern (2, 2*) die in mindestens einer Reihe (1, 1a, 1b) hintereinander in einer Förder- oder Transportrichtung (TR) auf einer Horizontalfördereinrichtung (6) bewegt werden,
- mit einer Horizontalfördereinrichtung (6) zur Beförderung von Stückgütern (2, 2*) in mindestens einer Reihe (1, 1a, 1b) hintereinander in einer Förder- oder Transportrichtung (TR),
- mit wenigstens einer der Horizontalfördereinrichtung (6) räumlich zugeordneten Handhabungseinrichtung (10) zur klemmenden und/oder kraft- und/oder formschlüssigen Erfassung jeweils mindestens eines Stückgutes (2, 2*) und zu dessen räumlicher Abtrennung von der Reihe (1, 1a, 1b) und zur Verbringung des mindestens einen Stückgutes (2, 2*) in eine definierte relative Zielposition (P, P1, P2, P3, P4, P5, P6, P7, P8) und/oder Zielausrichtung gegenüber nachfolgenden Stückgütern (2, 2*), **gekennzeichnet durch**:
- einem Steuerungssystem zur Uberwachung der Vorschubbewegungen der Horizontalfördereinrichtung (6) und der Erfassungs- und Positionierungsbewegungen der wenigstens einen Handhabungseinrichtung (10) sowie zu deren Steuerung, insbesondere zur Ausbildung von palettierbaren Lagenanordnungen (12) aus mehreren verschobenen und neu positionierten und/oder ausgerichteten Stückgütern (2, 2*),
- wobei im Steuerungssystem Steuerungsroutinen zur Erkennung von auftretenden Störungsereignissen mit zumindest vorübergehenden Stillständen der Horizontalfördereinrichtung (6) und der Handhabungseinrichtung (10) und zur Neuinitialisierung der Handhabungseinrichtung (10), zu deren fortgesetzten Erfassungs- und Positionierungsbewegungen zur Handhabung der Stückgüter (2, 2*) sowie zum selbsttätigen Wiederanfahren der Horizontalfördereinrichtung (6) nach behobener Störung und beendetem Störungsereignis enthalten bzw. abgespeichert sind,
bei dem eine Sensorik zur Erfassung und Zwischenspeicherung aller Positionen der auf der Horizontalfördereinrichtung (6) befindlichen und/oder in einem Erfassungsbereich (4) der Handhabungseinrichtung (10) befindlichen Stückgüter (2, 2*) sowie zu deren Übermittlung an das Steuerungssystem vorhanden ist, wobei jeweils zwischengespeicherte Positionen der Stückgüter (2, 2*) nach der Systemunterbrechung zur Fortsetzung der Prozessabläufe und für die Steuerung der Bewegungsabläufe der Handhabungseinrichtung (10) abrufbar sind.

12. Handhabungssystem nach Anspruch 11, bei dem die im Steuerungssystem enthaltenen bzw. abgespeicherten Steuerungsroutinen nach der Neuinitialisierung der Handhabungseinrichtung (10) ein selbsttätiges und automatisches Weiterführen des zuvor unterbrochenen Handhabungs- und/oder Positionierungsprozesses für die Stückgüter (2, 2*) an der unterbrochenen Stelle vorsehen.

13. Handhabungssystem nach Anspruch 11, bei dem zumindest einigen beweglichen Abschnitten der Handhabungseinrichtung (10) Sensoren und/oder Absolutwertgeber zugeordnet sind, deren Daten für eine Neuinitialisierung nach einer Systemunterbrechung und zur Fortsetzung eines unterbrochenen und noch nicht abgeschlossenen Handhabungsprozesses für mindestens ein zu positionierendes Stückgut (2, 2*) verarbeitet werden.

14. Handhabungssystem nach einem der Ansprüche 11 bis 13, bei dem die wenigstens eine Handhabungseinrichtung (10) durch einen Parallelkinematik-Roboter (42) mit mindestens einem steuerbaren Greifarm zur Erfassung eines Stückgutes (2, 2*) oder gleichzeitig mehrerer Stückgüter (2, 2*) gebildet ist, dessen Bewegungsraum (4) räumlich der Horizontalfördereinrichtung (6) zugeordnet ist.

## Claims

1. A method for manipulating and/or for handling piece goods (2, 2*) moved one after another in at least one row (1, 1a, 1b) in a transport direction (TR) on a horizontal conveying device (6), wherein in this method
- in each work cycle at least one transported piece good (2, 2*) is in each instance seized in a clamping and/or force-locking and/or form-locking manner from the at least one row (1, 1a, 1b) by means of at least one handling device (10); is spatially separated from the row (1, 1a, 1b); and is brought into a specified relative target position (P, P1, P2, P3, P4, P5, P6, P7, P8) and/or target alignment in relation to subsequent piece goods (2, 2*),
- whereupon the at least one separated and moved piece good (2, 2*) is further transported in the same transport direction (TR) as before, the method **characterised in that**
- all positions and/or reached target positions (P, P1, P2, P3, P4, P5, P6, P7, P8) of the piece goods (2, 2*) located on the horizontal conveying device (6) and/or located in a seizing range (4) of the handling device (10) are in each instance intermediately stored, and, after the failure has been remedied, are retrieved for the continuation of the process flows and for the control of the movement patterns of the handling device (10);
- wherein, after a failure event with an at least temporary standstill of the horizontal conveying device (6) and of the handling device (10) has occurred, the handling device (10) is initialised,
- and wherein, after the failure has been remedied, the horizontal conveying device (6) restarts in a self-acting manner and the previously interrupted handling process and/or position changing process is continued.

2. The method according to claim 1, in which, after the failure has been remedied, the horizontal conveying device (6) restarts in a self-acting manner and automatically, and in which, after the initialisation has been performed, the handling device (10) continues the previously interrupted handling process and/or positioning process for the piece goods (2, 2*) at the point of interruption.

3. The method according to claim 1 or 2, in which, after the failure has been remedied, the method runs for a specified period of time in a repair mode, in which substantially only those components are activated that are necessary for establishing a regular production mode.

4. The method according to one of the previous claims, in which, after the failure has been remedied, at least the horizontal conveying device (6) starts at reduced speed (v6*) and runs for a specified period of time at a feed speed (v6*) that is reduced in relation to the regular production mode.

5. The method according to claim 4, in which, with the horizontal conveying device (6) having started at reduced feed speed (v6*), the handling device (10) starts at reduced positioning speed and is operated for a specified period of time at a positioning speed that is reduced in relation to the regular production mode.

6. The method according to one of the previous claims, in which, in the repair mode, after the initialisation of the handling device (10), stored position values and/or target positions (P, P1, P2, P3, P4, P5, P6, P7, P8) of all piece goods (2, 2*) as well as at least one position value of the handling device (10) are retrieved.

7. The method according to one of the claims 1 to 6, in which, after the initialisation of the handling device (10), each commenced work cycle interrupted by the occurred failure event is continued and/or completed.

8. The method according to claim 6 or 7, in which, after the failure has been remedied and after the initialisation has been performed, the handling device (10) continues the process flows and/or movement patterns interrupted by the failure event in the in each instance interrupted phase by means of a query of the signal values from absolute encoders assigned to movable sections at least of the handling device (10).

9. The method according to one of the claims 3 to 8, in which, in the repair mode, the positions and/or target positions (P, P1, P2, P3, P4, P5, P6, P7, P8) of all piece goods (2, 2*) are detected by means of image processing, and are brought into relation with the movements of the handling device (10).

10. The method according to one of the claims 1 to 7, in which, in the repair mode, the positions and/or target positions (P, P1, P2, P3, P4, P5, P6, P7, P8) of all piece goods (2, 2*) are detected by means of at least one sensor movable parallel to the horizontal conveying device (6), and are brought into relation with the movements of the handling device (10).

11. A handling system for manipulating and/or for handling piece goods (2, 2*) moved one after another in at least one row (1, 1a, 1b) in a conveying direction or transport direction (TR) on a horizontal conveying device (6),
- with a horizontal conveying device (6) for the conveyance of piece goods (2, 2*) one after another in at least one row (1, 1a, 1b) in a conveying direction or transport direction (TR),
- with at least one handling device (10) spatially assigned to the horizontal conveying device (6), the handling device (10) being for the seizing of in each instance at least one piece good (2, 2*) in a clamping and/or force-locking and/or form-locking manner, and for the spatial separation thereof from the row (1, 1a, 1b), and for the transfer of the at least one piece good (2, 2*) into a specified relative target position (P, P1, P2, P3, P4, P5, P6, P7, P8) and/or target alignment in relation to subsequent piece goods (2, 2*), **characterised by**:
- a control system for monitoring the feed movements of the horizontal conveying device (6) and the seizing movements and positioning movements of the at least one handling device (10), as well as for the control thereof, in particular, to form palletisable layer arrangements (12) of a plurality of shifted and repositioned and/or realigned piece goods (2, 2*),
- wherein control routines are contained or, as applicable, stored in the control system, the control routines being for the identification of occurring failure events with at least temporary standstills of the horizontal conveying device (6) and of the handling device (10), and for the reinitialisation of the handling device (10), and for the continued seizing movements and positioning movements thereof for handling the piece goods (2, 2*), as well as for the self-acting restart of the horizontal conveying device (6) after the failure has been remedied and the failure event has been ended,
in which a sensor system is present for the detection and intermediate storage of all positions of the piece goods (2, 2*) located on the horizontal conveying device (6) and/or located in a seizing range (4) of the handling device (10), as well as for the transmission thereof to the control system, wherein, after the system interruption, in each instance intermediately stored positions of the piece goods (2, 2*) are retrievable for the continuation of the process flows and for the control of the movement patterns of the handling device (10).

12. The handling system according to claim 11, in which, after the reinitialisation of the handling device (10), the control routines contained or, as applicable, stored in the control system provide a self-acting and automatic continuation of the previously interrupted handling process and/or positioning process for the piece goods (2, 2*) at the point of interruption.

13. The handling system according to claim 11, in which sensors and/or absolute encoders are assigned to at least some movable sections of the handling device (10), the data from which sensors and/or absolute encoders are processed for a reinitialisation after a system interruption and for the continuation of an interrupted and not yet completed handling process for at least one piece good (2, 2*) to be positioned.

14. The handling system according to one of the claims 11 to 13, in which the at least one handling device (10) is formed by a parallel kinematic robot (42) with at least one controllable gripping arm for the seizure of a piece good (2, 2*) or of a plurality of piece goods (2, 2*) simultaneously, the movement range (4) thereof being spatially assigned to the horizontal conveying device (6).

## Revendications

1. Procédé de manutention et/ou de manipulation de produits de détail (2, 2*) qui sont déplacés les uns derrière les autres en au moins une rangée (1, 1a, 1b) dans une direction de transport (TR) sur un dispositif de transport horizontal (6), dans lequel procédé,
- à chaque cycle de travail, respectivement au moins un produit de détail (2, 2*) transporté est saisi par serrage et/ou par adhérence et/ou à engagement positif dans ladite au moins une rangée (1, 1a, 1b) au moyen d'au moins un dispositif de manipulation (10), est séparé spatialement de la rangée (1, 1a, 1b) et est amené dans une position cible (P, P1, P2, P3, P4, P5, P6, P7, P8) et/ou orientation cible relative(s) définie(s) par rapport à des produits de détail (2, 2*) suivants,
- après quoi on continue à transporter ledit au moins un produit de détail (2, 2*) qui a été séparé et déplacé, dans la même direction de transport (TR) qu'auparavant, **caractérisé par le fait que**
- toutes les positions et/ou positions cibles (P, P1, P2, P3, P4, P5, P6, P7, P8) atteintes des produits de détail situés sur le dispositif de transport horizontal (6) et/ou se trouvant dans une zone de saisie (4) du dispositif de manipulation (10) sont chacun temporairement stockés et sont appelées après avoir réparé la panne afin de poursuivre les déroulements de processus et de commander les déroulements de mouvement du dispositif de manipulation (10)
- dans lequel le dispositif de manipulation (10) est initialisé après qu'un événement de panne avec un arrêt au moins temporaire du dispositif de transport horizontal (6) et du dispositif de manipulation (10) s'est produit,
- et dans lequel, après que la panne a été réparée, le dispositif de transport horizontal (6) redémarre automatiquement et le processus de manipulation et/ou de changement de position précédemment interrompu est poursuivi.

2. Procédé selon la revendication 1, dans lequel, après que la panne a été réparée, le dispositif de transport horizontal (6) redémarre de manière automatique, et dans lequel, après que l'initialisation a eu lieu, le dispositif de manipulation (10) reprend le processus de manipulation et/ou de positionnement précédemment interrompu pour les produits de détail (2, 2*), sur le point où il a été interrompu.

3. Procédé selon la revendication 1 ou 2, dans lequel, après que la panne a été réparée, le procédé fonctionne dans un mode de réparation pendant un temps défini, dans lequel, pour l'essentiel, seuls les composants sont activés qui sont nécessaires à l'établissement d'un mode de production régulier.

4. Procédé selon l'une quelconque des revendications précédentes, dans lequel au moins le dispositif de transport horizontal (6) démarre à une vitesse réduite (v6*) après avoir réparé la panne et fonctionne pendant un temps défini à une vitesse d'avance (v6*) qui est réduite par rapport au mode de production régulier.

5. Procédé selon la revendication 4, dans lequel, lorsque le dispositif de transport horizontal (6) a démarré à une vitesse d'avance réduite (v6*), le dispositif de manipulation (10) démarre à une vitesse de positionnement réduite et fonctionne pendant un temps défini à une vitesse de positionnement réduite par rapport au mode de production régulier.

6. Procédé selon l'une quelconque des revendications précédentes, dans lequel des valeurs de position et/ou positions cibles (P, P1, P2, P3, P4, P5, P6, P7, P8) de tous les produits de détail (2, 2*) qui sont mémorisées en mode de réparation ainsi qu'au moins une valeur de position du dispositif de manipulation (10) sont appelées après l'initialisation de celui-ci.

7. Procédé selon l'une quelconque des revendications 1 à 6, dans lequel chaque cycle de travail commencé et interrompu par l'événement de panne qui s'est produit est poursuivi et/ou terminé après l'initialisation du dispositif de manipulation (10).

8. Procédé selon la revendication 6 ou 7, dans lequel, après que la panne a été réparée et après que l'initialisation a eu lieu, le dispositif de manipulation (10) poursuit, dans la phase respectivement interrompue, les déroulements de processus et/ou déroulements de mouvement interrompus par l'événement de panne, au moyen d'une interrogation des valeurs de signaux de codeurs de valeur absolue associés à des sections mobiles au moins du dispositif de manipulation (10).

9. Procédé selon l'une quelconque des revendications 3 à 8, dans lequel, en mode réparation, les positions et/ou positions cibles (P, P1, P2, P3, P4, P5, P6, P7, P8) de tous les produits de détail (2, 2*) sont saisies par traitement d'image et sont mises en référence aux mouvements du dispositif de manipulation (10).

10. Procédé selon l'une quelconque des revendications 1 à 7, dans lequel, en mode réparation, les positions et/ou positions cibles (P, P1, P2, P3, P4, P5, P6, P7, P8) de tous les produits de détail (2, 2*) sont saisies au moyen d'au moins un capteur déplaçable parallèlement au dispositif de transport horizontal (6) et sont mises en référence aux mouvements du dispositif de manipulation (10).

11. Système de manipulation pour la manutention et/ou la manipulation de produits de détail (2, 2*) qui sont déplacés les uns derrière les autres en au moins une rangée (1, 1a, 1b) dans une direction de convoyage ou de transport (TR) sur un dispositif de transport horizontal (6),
- comprenant un dispositif de transport horizontal (6) pour convoyer des produits de détail (2, 2*) les uns derrière les autres en au moins une rangée (1, 1a, 1b) dans une direction de convoyage ou de transport (TR),
- comprenant au moins un dispositif de manipulation (10) associé dans l'espace au dispositif de transport horizontal (6) pour saisir par serrage et/ou par adhérence et/ou à engagement positif respectivement au moins un produit de détail (2, 2*) et pour séparer spatialement celui-ci de la rangée (1, 1a, 1b) et pour amener ledit au moins un produit de détail (2, 2*) dans une position cible (P, P1, P2, P3, P4, P5, P6, P7, P8) et/ou orientation cible relative(s) définie(s) par rapport à des produits de détail (2, 2*) suivants, **caractérisé par**:
- un système de commande pour surveiller les mouvements d'avance du dispositif de transport horizontal (6) et les mouvements de saisie et de positionnement dudit au moins un dispositif de manipulation (10) et pour commander ceux-ci, en particulier pour réaliser des agencements de couches palettisables (12) à partir d'une pluralité de produits de détail (2, 2*) décalés et repositionnés et/ou alignés,
- dans lequel des routines de commande pour la détection d'événements de panne qui se produisent, avec des arrêts au moins temporaires du dispositif de transport horizontal (6) et du dispositif de manipulation (10), et pour la réinitialisation du dispositif de manipulation (10), pour ses mouvements continués de saisie et de positionnement pour la manipulation des produits de détail (2, 2*) ainsi que pour le redémarrage automatique du dispositif de transport horizontal (6) après que la panne a été réparée et que l'événement de panne a été terminé, sont contenues ou bien mémorisées dans le système de commande,
dans lequel il y a un ensemble de capteurs pour détecter et stocker temporairement toutes les positions des produits de détail (2, 2*) situés sur le dispositif de transport horizontal (6) et/ou se trouvant dans une zone de saisie (4) du dispositif de manipulation (10) ainsi que pour transmettre celles-ci au système de commande, dans lequel des positions respectivement temporairement mémorisées des produits de détail (2, 2*) peuvent être appelées après l'interruption du système afin de poursuivre les déroulements de processus et de commander les déroulements de mouvement du dispositif de manipulation (10).

12. Système de manipulation selon la revendication 11, dans lequel les routines de commande contenues ou bien mémorisées dans le système de commande prévoient, après la réinitialisation du dispositif de manipulation (10), de continuer automatiquement, sur le point interrompu, le processus de manipulation et/ou de positionnement précédemment interrompu pour les produits de détail (2, 2*).

13. Système de manipulation selon la revendication 11, dans lequel au moins à certaines sections mobiles du dispositif de manipulation (10) sont associés des capteurs et/ou des codeurs de valeur absolue dont les données sont traitées pour une réinitialisation après une interruption du système et pour continuer un processus de manipulation interrompu et pas encore achevé pour au moins un produit de détail (2, 2*) à positionner.

14. Système de manipulation selon l'une quelconque des revendications 11 à 13, dans lequel ledit au moins un dispositif de manipulation (10) est formé par un robot à cinématique parallèle (42) qui présente au moins un bras de préhension apte à être commandé et destiné à saisir un produit de détail (2, 2*) ou simultanément plusieurs produits de détail (2, 2*) et dont l'espace de déplacement (4) est associé spatialement au dispositif de transport horizontal (6).
